(19) Europäisches Patentamt / European Patent Office / Office européen des brevets

(11) **EP 4 694 455 A1**

(12) **EUROPEAN PATENT APPLICATION**
published in accordance with Art. 153(4) EPC

(43) Date of publication:
**11.02.2026   Bulletin 2026/07**

(21) Application number: **24795442.3**

(22) Date of filing: **11.01.2024**

(51) International Patent Classification (IPC):
**H04W 72/0446** (2023.01)

(52) Cooperative Patent Classification (CPC):
**H04W 72/0446; H04W 72/0453; H04W 72/21;
H04W 72/232**

(86) International application number:
**PCT/CN2024/071736**

(87) International publication number:
**WO 2024/222052 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2023   CN 202310489445
12.05.2023   CN 202310541452**

(71) Applicant: **Huawei Technologies Co., Ltd.
Shenzhen, Guangdong 518129 (CN)**

(72) Inventors:
• **LI, Chao**
  **Shenzhen, Guangdong 518129 (CN)**
• **LI, Jun**
  **Shenzhen, Guangdong 518129 (CN)**
• **ZHANG, Mengchen**
  **Shenzhen, Guangdong 518129 (CN)**
• **YAO, Chuting**
  **Shenzhen, Guangdong 518129 (CN)**
• **XIA, Jinhuan**
  **Shenzhen, Guangdong 518129 (CN)**

(74) Representative: **Isarpatent
Patent- und Rechtsanwälte Partg mbB
Friedrichstraße 31
80801 München (DE)**

(54) **DATA TRANSMISSION METHOD AND APPARATUS**

(57)   Embodiments of this application provide a data transmission method and a communication apparatus. According to this application, a first device can determine, based on a quantity of time domain subunits occupied by a PRS, a quantity of resources of a first physical shared channel within a first frequency domain unit, and determine, based on the quantity of resources of the first physical shared channel within the first frequency domain unit, a TBS of a first TB transmitted on the first physical shared channel, to improve accuracy of the determined TBS and improve transmission performance.

FIG. 3

EP 4 694 455 A1

## Description

This application claims priorities to Chinese Patent Application No. 202310489445.X, filed with the China National Intellectual Property Administration on April 28, 2023, and entitled "PSSCH RATE MATCHING INDICATION METHOD AND DEVICE", and to Chinese Patent Application No. 202310541452.X, filed with the China National Intellectual Property Administration on May 12, 2023, and entitled "DATA TRANSMISSION METHOD AND APPARATUS", both of which are incorporated herein by reference in their entireties.

## TECHNICAL FIELD

Embodiments of this application relate to the communication field, and more specifically, to a data transmission method and an apparatus.

## BACKGROUND

In daily life and applications, location information becomes increasingly important basic information. Applications such as a navigation service and a location-based service (location-based service, LBS) need to provide corresponding services for users based on location information of the users.

Currently, a global navigation satellite system (global navigation satellite system, GNSS) is a common solution for determining location information. Positioning accuracy of the GNSS may not meet requirements of some applications that have high accuracy requirements. To resolve this problem, it is proposed in the industry that positioning is performed through transmission of a positioning reference signal (positioning reference signal, PRS).

When one slot includes a symbol used for transmission of the PRS, how to determine a transport block size (TB size, TBS) of a transport block (transport block, TB) transmitted in the slot becomes an urgent problem to be resolved.

## SUMMARY

Embodiments of this application provide a data transmission method, to improve accuracy of a determined transport block size (transport block size, TBS), to ensure data transmission performance.

According to a first aspect, a data transmission method is provided. The method may be performed by a first device, or may be performed by a component (for example, a chip or a circuit) of the first device. Alternatively, in some implementations, the first device may be a chip or a circuit. This is not limited in this embodiment of this application. For ease of description, an example in which the method is performed by the first device is used as an example below for description.

The method may include: The first device determines a first resource quantity based on a first parameter. The first resource quantity is a quantity of resources of a first physical shared channel within a first frequency domain unit. The first parameter includes a quantity of time domain subunits occupied by a positioning reference signal (positioning reference signal, PRS). The PRS and a second physical shared channel are located in a first time domain unit. The second physical shared channel is used for transmission of a first transport block (transport block, TB). The first device determines a TBS of the first TB based on the first resource quantity. The first device sends the first TB through the first physical shared channel.

According to the foregoing technical solution, the first device can determine, based on the quantity of time domain subunits occupied by the PRS, the quantity of resources of the first physical shared channel within the first frequency domain unit, and determine the TBS of the first TB based on the quantity of resources of the first physical shared channel within the first frequency domain unit, to improve accuracy of the determined TBS and improve transmission performance. For example, if the first device does not consider, when determining the TBS of the first TB, the quantity of time domain subunits occupied by the PRS, and a time domain unit in which the first physical shared channel is located includes the PRS, the first device may determine a larger TBS, affecting transmission performance of the first TB.

For example, the physical shared channel is a physical sidelink shared channel (physical sidelink shared channel, PSSCH), and the PRS is a sidelink positioning reference signal (sidelink PRS, SL-PRS).

For example, the first physical shared channel and the second physical shared channel are a same channel; or the first physical shared channel is used for initial transmission of the first TB, and the second physical shared channel is used for retransmission of the first TB.

It should be noted that, if the first physical shared channel and the second physical shared channel are different channels, a TBS of the first TB transmitted on the first physical shared channel is the same as the TBS of the first TB transmitted on the second physical shared channel, so that a second device can combine and receive the first TB transmitted on the first physical shared channel and the first TB transmitted on the second physical shared channel.

For example, the quantity of time domain subunits occupied by the PRS is configured through higher layer signaling, or is preconfigured, or is predefined.

With reference to the first aspect, in some implementations of the first aspect, in the first time domain unit, the PRS and the second physical shared channel are time division multiplexed, and that the first device determines the first resource quantity based on the first parameter includes: The first device determines a quantity of time domain subunits related to the PRS based on the quantity of time domain subunits occupied by the PRS. The first device determines the first resource quantity based on the quantity of time domain subunits related to the PRS.

The quantity of time domain subunits related to the PRS is any one of the following: $M_{SL\text{-}PRS}$; or $M_{SL\text{-}PRS}+k$, where k is a positive integer; or $M^1_{SL\text{-}PRS}$, where $M^1_{SL\text{-}PRS} < M_{SL\text{-}PRS}$, where $M_{SL\text{-}PRS}$ represents the quantity of time domain subunits occupied by the PRS.

A value of $M_{SL\text{-}PRS}$ and/or a value of $M^1_{SL\text{-}PRS}$ are/is configured through higher layer signaling, or are/is preconfigured, or are/is predefined. A value of k depends on a quantity of automatic gain control (automatic gain control, AGC) symbols and/or a quantity of null symbols before the time domain subunit occupied by the PRS, for example, the value of k is 1 or 2.

In a possible implementation, the first parameter further includes at least one of the following: a quantity of time domain subunits related to a physical feedback channel, overheads indicated by a higher layer parameter, and a quantity of resources occupied by a demodulation reference signal (demodulation reference signal, DMRS).

For example, the physical feedback channel is a physical side feedback channel (physical sidelink feedback channel, PSFCH).

Assuming that the first time domain unit is a slot, the time domain subunit is a symbol, and the first physical shared channel is a PSSCH, a quantity of symbols of the first physical shared channel in one slot is $(N^{sh}_{symb} - N^{PSFCH}_{symb} - N^{SL-PRS}_{symb})$. $N^{sh}_{symb}$ is determined by a quantity of sidelink symbols in one slot, $N^{PSFCH}_{symb}$ represents the quantity of symbols related to the physical feedback channel, and $N^{SL-PRS}_{symb}$ represents the quantity of time domain subunits related to the PRS.

Assuming that the first time domain unit is a slot, the time domain subunit is a symbol, and the first frequency domain unit is a physical resource block PRB, the first resource quantity satisfies a condition:

$$N^{'}_{RE} = N^{RB}_{SC}(N^{sh}_{symb} - N^{PSFCH}_{symb} - N^{SL-PRS}_{symb}) - N^{PRB}_{oh} - N^{DMRS}_{RE}$$

$N^{'}_{RE}$ represents the first resource quantity, $N^{RB}_{sc}$ represents a quantity of subcarriers within one PRB, $N^{DMRS}_{RE}$ represents a quantity of resource elements REs occupied by the DMRS within one PRB, and $N^{PRB}_{oh}$ represents overheads indicated by the higher layer signaling.

With reference to the first aspect, in some implementations of the first aspect, the method further includes: The first device sends first indication information. The first indication information is used to determine the quantity of time domain subunits related to the PRS.

For example, if the quantity of time domain subunits related to the PRS is $M^1_{SL\text{-}PRS}$, the first device can send the first indication information, so that the second device can determine the quantity of time domain subunits related to the PRS based on the first indication information.

With reference to the first aspect, in some implementations of the first aspect, the method further includes: The first device determines, based on the quantity of time domain subunits related to the PRS, a quantity of coded modulation symbols of control information transmitted on the first physical shared channel. The first device sends the control information on the first physical shared channel based on the quantity of coded modulation symbols of the control information.

According to the foregoing technical solution, the first device can determine, based on the quantity of time domain subunits occupied by the PRS, the quantity of coded modulation symbols of the control information transmitted on the first physical shared channel, so that accuracy of the determined quantity of coded modulation symbols of the control information can be improved, and the transmission performance can be improved.

With reference to the first aspect, in some implementations of the first aspect, in the first time domain unit, the PRS and the second physical shared channel are frequency division multiplexed, the first parameter further includes a frequency domain interval of the PRS, and that the first device determines the first resource quantity based on the first parameter includes: The first device determines a second resource quantity based on the quantity of time domain subunits occupied by the PRS and the frequency domain interval. The second resource quantity is related to the PRS. The first device determines the first resource quantity based on the second resource quantity.

The second resource quantity is any one of the following: $N \cdot M_{SL\text{-}PRS} / N_{comb}$; or $\omega \cdot N \cdot M_{SL\text{-}PRS} / N_{comb}$; or *floor*

($N \cdot M_{SL\text{-}PRS} / N_{comb}$); or *floor*($\omega \cdot N \cdot M_{SL\text{-}PRS} / N_{comb}$; or *ceiling* ($N \cdot M_{SL\text{-}PRS} / N_{comb}$); or *ceiling* ($\omega \cdot N \cdot M_{SL\text{-}PRS} / N_{comb}$).

$N$ represents a quantity of frequency domain subunits within the first frequency domain unit, $M_{SL\text{-}PRS}$ represents the quantity of time domain subunits occupied by the PRS, $N_{comb}$ represents the frequency domain interval, $\omega$ is a real number greater than 0 and less than 1, *floor*($x$) represents rounding down x, and *ceiling*($x$) represents rounding up x.

For example, the frequency domain interval is configured through higher layer signaling, or is preconfigured, or is predefined.

In a possible implementation, the first parameter further includes at least one of the following: a quantity of time domain subunits related to a physical feedback channel, overheads indicated by a higher layer parameter, and a quantity of resources occupied by a DMRS.

Assuming that the first time domain unit is a slot, the time domain subunit is a symbol, the first frequency domain unit is a PRB, and the first physical shared channel is a PSSCH, the first resource quantity satisfies a condition:

$$N_{RE}' = N_{SC}^{RB}(N_{symb}^{sh} - N_{symb}^{PSFCH}) - N_{RE}^{SL\text{-}PRS} - N_{oh}^{PRB} - N_{RE}^{DMRS}.$$ $N_{RE}^{SL\text{-}PRS}$ represents the second resource quantity.

With reference to the first aspect, in some implementations of the first aspect, the method further includes: The first device sends second indication information. The second indication information is used to determine the second resource quantity.

For example, if the second resource quantity is related to $\omega$, the first device can send the second indication information, so that the second device can determine the second resource quantity based on the second indication information.

With reference to the first aspect, in some implementations of the first aspect, the method further includes: The first device determines a quantity of time domain subunits related to the PRS based on the quantity of time domain subunits occupied by the PRS and the frequency domain interval. The first device determines, based on the quantity of time domain subunits related to the PRS, a quantity of coded modulation symbols of control information transmitted on the first physical shared channel. The first device sends the control information on the first physical shared channel based on the quantity of coded modulation symbols of the control information.

The quantity of time domain subunits related to the PRS is any one of the following: $M_{SL\text{-}PRS} / N_{comb}$; or $\omega \cdot M_{SL\text{-}PRS} / N_{comb}$; or *floor*($M_{SL\text{-}PRS} / N_{comb}$); or *floor*($\omega \cdot M_{SL\text{-}PRS} / N_{comb}$); or *ceiling*($M_{SL\text{-}PRS} / N_{comb}$); or *ceiling* ($\omega \cdot M_{SL\text{-}PRS} / N_{comb}$).

Assuming that the first time domain unit is a slot, the time domain subunit is a symbol, and the first physical shared channel is a PSSCH, the quantity of coded modulation symbols of the control information transmitted on the first physical shared channel satisfies the following condition:

$$Q_{SCI2}' = \min\left\{ \left\lceil \frac{(Q_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma.$$ $Q_{SCI2}'$ represents the quantity of coded modulation symbols of the control information, $Q_{SCI2}$ represents a quantity of bits of the control information, $L_{SCI2}$ represents a quantity of cyclic redundancy check bits of the control information, $\beta_{offset}^{SCI2}$ is a parameter indicated by 1st-stage sidelink control information (sidelink control information, SCI), $M_{sc}^{SCI2}(l)$ represents a quantity of subcarriers that are used to send the control information at a symbol $l$ and that are of the first physical shared channel, R represents a code rate, $\gamma$ is a quantity of unoccupied REs in a resource block (resource block, RB) in which a last coded symbol of the control information is located, $Q_m^{SCI2}$ represents a modulation order, $\alpha$ is a scaling factor configured through higher layer signaling, $N_{symbol}^{PSSCH}$ represents a quantity of symbols of the first physical shared channel in one slot, and

$$N_{symbol}^{PSSCH} = N_{symb}^{sh} - N_{symb}^{PSFCH} - N_{symb}^{SL\text{-}PRS}.$$

With reference to the first aspect, in some implementations of the first aspect, the method further includes: The first device sends third indication information. That the first device determines the first resource quantity based on the first parameter includes: When the third indication information is a first value, the first device determines the first resource quantity based on the first parameter.

According to the foregoing technical solution, the second device can determine, based on the third indication information, that the first device determines the first resource quantity based on the first parameter, so that the second device can also determine the first resource quantity based on the first parameter, to ensure that the first device and the second device determine a same TBS.

With reference to the first aspect, in some implementations of the first aspect, the method further includes: The first device sends fourth indication information. The fourth indication information indicates a multiplexing manner of the PRS and the second physical shared channel in the first time domain unit, and the multiplexing manner is time division multiplexing or frequency division multiplexing.

For example, if the multiplexing manner of the PRS and the second physical shared channel in the first time domain unit is independently determined by the first device, the first device can send the fourth indication information, so that the second device can determine the multiplexing manner of the PRS and the second physical shared channel in the first time domain unit based on the fourth indication information.

With reference to the first aspect, in some implementations of the first aspect, the method further includes: The first device determines the multiplexing manner of the PRS and the second physical shared channel in the first time domain unit. The multiplexing manner is time division multiplexing or frequency division multiplexing. The multiplexing manner is configured through higher layer signaling, or is preconfigured, or is predefined, or corresponds to the first time domain unit.

With reference to the first aspect, in some implementations of the first aspect, that the first device determines the TBS of the TB based on the first resource quantity includes: The first device determines a total quantity of resources of the first physical shared channel based on the first resource quantity and a quantity of first frequency domain units included in the first physical shared channel. The first device determines the TBS based on the total quantity of resources of the first physical shared channel.

According to a second aspect, a data transmission method is provided. The method may be performed by a second device, or may be performed by a component (for example, a chip or a circuit) of the second device. Alternatively, in some implementations, the second device may be a chip or a circuit. This is not limited in this embodiment of this application. For ease of description, an example in which the method is performed by the second device is used as an example below for description.

The method includes: The second device receives a first TB from a first device through a first physical shared channel. The second device determines a first resource quantity based on a first parameter. The first resource quantity is a quantity of resources of the first physical shared channel within a first frequency domain unit. The first parameter includes a quantity of time domain subunits occupied by a PRS. The PRS and a second physical shared channel are located in a first time domain unit. The second physical shared channel is used for transmission of the first TB. The second device determines a TBS of the first TB based on the first resource quantity. The second device demodulates the first TB based on the TBS.

For beneficial effects of the second aspect and the implementations of the second aspect, refer to the descriptions of the first aspect.

For example, the first physical shared channel and the second physical shared channel are a same channel; or the first physical shared channel is used for initial transmission of the first TB, and the second physical shared channel is used for retransmission of the first TB.

For example, the quantity of time domain subunits occupied by the PRS is configured through higher layer signaling, or is preconfigured, or is predefined.

With reference to the second aspect, in some implementations of the second aspect, in the first time domain unit, the PRS and the second physical shared channel are time division multiplexed, and that the second device determines the first resource quantity based on the first parameter includes: The second device determines a quantity of time domain subunits related to the PRS based on the quantity of time domain subunits occupied by the PRS. The second device determines the first resource quantity based on the quantity of time domain subunits related to the PRS.

With reference to the second aspect, in some implementations of the second aspect, in the first time domain unit, the PRS and the second physical shared channel are time division multiplexed, and the method further includes: The second device receives first indication information from the first device. The first indication information is used to determine a quantity of time domain subunits related to the PRS. That the second device determines the first resource quantity based on the first parameter includes: The second device determines the quantity of time domain subunits related to the PRS based on the quantity of time domain subunits occupied by the PRS and the first indication information. The second device determines the first resource quantity based on the quantity of time domain subunits related to the PRS.

The quantity of time domain subunits related to the PRS is any one of the following: $M_{\text{SL-PRS}}$; or $M_{\text{SL-PRS}}+k$, where k is a positive integer; or $M^{1}_{\text{SL-PRS}}$, where $M^{1}_{\text{SL-PRS}} < M_{\text{SL-PRS}}$, where $M_{\text{SL-PRS}}$ represents the quantity of time domain subunits occupied by the PRS.

With reference to the second aspect, in some implementations of the second aspect, the first parameter further includes at least one of the following: a quantity of time domain subunits related to a physical feedback channel, overheads indicated by a higher layer parameter, and a quantity of resources occupied by a DMRS.

Assuming that the first time domain unit is a slot, the time domain subunit is a symbol, and the first physical shared channel is a PSSCH, a quantity of symbols of the first physical shared channel in one slot is $(N^{sh}_{symb} - N^{PSFCH}_{symb} - N^{SL-PRS}_{symb})$. $N^{sh}_{symb}$ is determined by a quantity of sidelink symbols in one slot, $N^{PSFCH}_{symb}$

represents the quantity of symbols related to the physical feedback channel, and $N_{symb}^{SL-PRS}$ represents the quantity of time domain subunits related to the PRS.

Assuming that the first time domain unit is a slot, the time domain subunit is a symbol, and the first frequency domain unit is a physical resource block PRB, the first resource quantity satisfies a condition:

$$N_{RE}^{'} = N_{SC}^{RB} (N_{symb}^{sh} - N_{symb}^{PSFCH} - N_{symb}^{SL-PRS}) - N_{oh}^{PRB} - N_{RE}^{DMRS}$$

. $N_{RE}^{'}$ represents the first resource quantity, $N_{sc}^{RB}$ represents a quantity of subcarriers within one PRB, $N_{RE}^{DMRS}$ represents a quantity of resource elements REs occupied by the DMRS within one PRB, and $N_{oh}^{PRB}$ represents overheads indicated by the higher layer signaling.

With reference to the second aspect, in some implementations of the second aspect, the method further includes: The second device receives control information from the first device through the first physical shared channel. The second device determines a quantity of coded modulation symbols of the control information based on the quantity of time domain subunits related to the PRS. The second device demodulates the control information based on the quantity of coded modulation symbols of the control information.

With reference to the second aspect, in some implementations of the second aspect, in the first time domain unit, the PRS and the second physical shared channel are frequency division multiplexed, the first parameter further includes a frequency domain interval of the PRS, and that the second device determines the first resource quantity based on the first parameter includes: The second device determines a second resource quantity based on the quantity of time domain subunits occupied by the PRS and the frequency domain interval. The second resource quantity is related to the PRS. The second device determines the first resource quantity based on the second resource quantity.

With reference to the second aspect, in some implementations of the second aspect, in the first time domain unit, the PRS and the second physical shared channel are frequency division multiplexed, the first parameter further includes a frequency domain interval of the PRS, and the method further includes: The second device receives second indication information from the first device. The second indication information is used to determine a second resource quantity, and the second resource quantity is related to the PRS. That the second device determines the first resource quantity based on the first parameter includes: The second device determines the second resource quantity based on the quantity of time domain subunits occupied by the PRS, the frequency domain interval, and the second indication information. The second device determines the first resource quantity based on the second resource quantity.

The second resource quantity is any one of the following: $N \cdot M_{SL-PRS} / N_{comb}$; or $\omega \cdot N \cdot M_{SL-PRS} / N_{comb}$; or *floor* $(N \cdot M_{SL-PRS} / N_{comb})$; or *floor*$(\omega \cdot N \cdot M_{SL-PRS} / N_{comb})$; or *ceiling*$(N \cdot M_{SL-PRS} / N_{comb})$; or *ceiling*$(\omega \cdot N \cdot M_{SL-PRS} / N_{comb})$.

$N$ represents a quantity of frequency domain units within one PRB, $M_{SL-PRS}$ represents the quantity of time domain subunits occupied by the PRS, $N_{comb}$ represents the frequency domain interval, $\omega$ is a real number greater than 0 and less than 1, *floor*$(x)$ represents rounding down x, and *ceiling*$(x)$ represents rounding up x.

For example, the frequency domain interval is configured through higher layer signaling, or is preconfigured, or is predefined.

With reference to the second aspect, in some implementations of the second aspect, the first parameter further includes at least one of the following: a quantity of time domain subunits related to a physical feedback channel, overheads indicated by a higher layer parameter, and a quantity of resources occupied by a DMRS.

Assuming that the first time domain unit is a slot, the time domain subunit is a symbol, the first frequency domain unit is a PRB, and the first physical shared channel is a PSSCH, the first resource quantity satisfies a condition:

$$N_{RE}^{'} = N_{SC}^{RB} (N_{symb}^{sh} - N_{symb}^{PSFCH}) - N_{RE}^{SL-PRS} - N_{oh}^{PRB} - N_{RE}^{DMRS}$$

. $N_{RE}^{SL-PRS}$ represents the second resource quantity.

With reference to the second aspect, in some implementations of the second aspect, the method further includes: The second device receives control information from the first device through the first physical shared channel. The second device determines a quantity of time domain subunits related to the PRS based on the quantity of time domain subunits occupied by the PRS and the frequency domain interval. The second device determines a quantity of coded modulation symbols of the control information based on the quantity of time domain subunits related to the PRS. The second device demodulates the control information based on the quantity of coded modulation symbols of the control information.

The quantity of time domain subunits related to the PRS is any one of the following: $M_{SL-PRS} / N_{comb}$; or $\omega \cdot M_{SL-PRS} / N_{comb}$; or *floor*$(M_{SL-PRS} / N_{comb})$; or *floor*$(\omega \cdot M_{SL-PRS} / N_{comb})$; or *ceiling*$(M_{SL-PRS} / N_{comb})$; or *ceiling*$(\omega \cdot M_{SL-PRS} / N_{comb})$.

Assuming that the first time domain unit is a slot, the time domain subunit is a symbol, and the first physical shared channel is a PSSCH, the quantity of coded modulation symbols of the control information satisfies the following condition:

$$Q_{SCI2}^{'} = \min \left\{ \left\lceil \frac{(Q_{SCI2} + L_{SCI2}) \cdot \beta_{offset}^{SCI2}}{Q_m^{SCI2} \cdot R} \right\rceil , \left\lceil \alpha \sum_{l=0}^{N_{symbol}^{PSSCH}-1} M_{sc}^{SCI2}(l) \right\rceil \right\} + \gamma$$

. $Q_{SCI2}^{'}$ represents the quantity of coded modulation symbols of the control information, $Q_{SCI2}$ represents a quantity of bits of the control information, $L_{SCI2}$ represents a quantity of cyclic redundancy check bits of the control information, $\beta_{offset}^{SCI2}$ is a parameter indicated by 1st-stage SCI, $M_{sc}^{SCI2}(l)$ represents a quantity of subcarriers that are used to send the control information at a symbol $l$ and that are of the first physical shared channel, R represents a code rate, $\gamma$ is a quantity of unoccupied REs in an RB in which a last coded symbol of the control information is located, $Q_m^{SCI2}$ represents a modulation order, $\alpha$ is a scaling factor configured through higher layer signaling, and $N_{symbol}^{PSSCH}$ represents a quantity of symbols of the first physical shared channel in one slot.

With reference to the second aspect, in some implementations of the second aspect, the method further includes: The second device receives third indication information from the first device. That the second device determines the first resource quantity based on the first parameter includes: When the third indication information is a first value, the second device determines the first resource quantity based on the first parameter.

With reference to the second aspect, in some implementations of the second aspect, the method further includes: The second device determines a multiplexing manner of the PRS and the second physical shared channel in the first time domain unit. The multiplexing manner is time division multiplexing or frequency division multiplexing. The multiplexing manner is configured through higher layer signaling, or is preconfigured, or is predefined, or corresponds to the first time domain unit, or is indicated by the first device.

With reference to the second aspect, in some implementations of the second aspect, the multiplexing manner is indicated by the first device, and the method further includes: The second device receives fourth indication information from the first device. The fourth indication information indicates the multiplexing manner.

With reference to the second aspect, in some implementations of the second aspect, that the second device determines the TBS of the TB based on the first resource quantity includes: The second device determines a total quantity of resources of the first physical shared channel based on the first resource quantity and a quantity of first frequency domain units included in the first physical shared channel. The second device determines the TBS based on the total quantity of resources of the first physical shared channel.

According to a third aspect, a data transmission method is provided. The method may be performed by a first device, or may be performed by a component (for example, a chip or a circuit) of the first device. Alternatively, in some implementations, the first device may be a chip or a circuit. This is not limited in this embodiment of this application. For ease of description, an example in which the method is performed by the first device is used as an example below for description.

The method includes: The first device determines, based on a first parameter, a quantity of coded modulation symbols of control information transmitted on a first physical shared channel. The first parameter includes a quantity of time domain subunits occupied by a PRS. The PRS and a second physical shared channel are located in a first time domain unit. The second physical shared channel is used for transmission of the control information. The first device transmits the control information on the first physical shared channel.

According to the foregoing technical solution, the first device can determine, based on the quantity of time domain subunits occupied by the PRS, the quantity of coded modulation symbols of the control information transmitted on the first physical shared channel, so that accuracy of the determined quantity of coded modulation symbols of the control information can be improved, and transmission performance can be improved. For example, if the first device does not consider, when determining the quantity of coded modulation symbols of the control information, the quantity of time domain subunits occupied by the PRS, and a time domain unit in which the first physical shared channel is located includes the PRS, the first device may determine a larger quantity of coded modulation symbols of the control information, affecting transmission performance of the control information.

For example, the physical shared channel is a PSSCH, the PRS is an SL-PRS, and the control information is SCI.

For example, the first physical shared channel and the second physical shared channel are a same channel; or the first physical shared channel is used for initial transmission of the control information, and the second physical shared channel is used for retransmission of the control information.

It should be noted that, if the first physical shared channel and the second physical shared channel are different channels, a quantity of coded modulation symbols of the control information transmitted on the first physical shared channel is the same as the quantity of coded modulation symbols of the control information transmitted on the second physical shared channel, so that a second device can combine and receive the control information transmitted on the first physical shared channel and the control information transmitted on the second physical shared channel.

For example, the quantity of time domain subunits occupied by the PRS is configured through higher layer signaling, or is preconfigured, or is predefined.

With reference to the third aspect, in some implementations of the third aspect, in the first time domain unit, the PRS and the second physical shared channel are time division multiplexed, and that the first device determines, based on the first parameter, the quantity of coded modulation symbols of the control information transmitted on the first physical shared channel includes: The first device determines a quantity of time domain subunits related to the PRS based on the quantity of time domain subunits occupied by the PRS. The first device determines the quantity of coded modulation symbols of the control information based on the quantity of time domain subunits related to the PRS.

The quantity of time domain subunits related to the PRS is any one of the following: $M_{SL\text{-}PRS}$; or $M_{SL\text{-}PRS}+k$, where k is a positive integer; or $M^1_{SL\text{-}PRS}$, where $M^1_{SL\text{-}PRS} < M_{SL\text{-}PRS}$, where $M_{SL\text{-}PRS}$ represents the quantity of time domain subunits occupied by the PRS.

A value of $M_{SL\text{-}PRS}$ and/or a value of $M^1_{SL\text{-}PRS}$ are/is configured through higher layer signaling, or are/is preconfigured, or are/is predefined. A value of k depends on a quantity of AGC symbols and/or a quantity of null symbols before the time domain subunit occupied by the PRS, for example, the value of k is 1 or 2.

With reference to the third aspect, in some implementations of the third aspect, the method further includes: The first device sends first indication information. The first indication information is used to determine the quantity of time domain subunits related to the PRS.

For example, if the quantity of time domain subunits related to the PRS is $M^1_{SL\text{-}PRS}$, the first device can send the first indication information, so that the second device can determine the quantity of time domain subunits related to the PRS based on the first indication information.

With reference to the third aspect, in some implementations of the third aspect, in the first time domain unit, the PRS and the second physical shared channel are frequency division multiplexed, the first parameter further includes a frequency domain interval of the PRS, and that the first device determines, based on the first parameter, the quantity of coded modulation symbols of the control information transmitted on the first physical shared channel includes: The first device determines the quantity of time domain subunits related to the PRS based on the quantity of time domain subunits occupied by the PRS and the frequency domain interval. The first device determines the quantity of coded modulation symbols of the control information based on the quantity of time domain subunits related to the PRS.

The quantity of time domain subunits related to the SL-PRS (as mentioned above, the physical shared channel is a PSSCH, the PRS is an SL-PRS, here use SL-PRS directly) is any one of the following: $M_{SL\text{-}PRS} / N_{comb}$; or $\omega \cdot M_{SL\text{-}PRS} / N_{comb}$; or $floor(M_{SL\text{-}PRS} / N_{comb})$; or $floor(\omega \cdot M_{SL\text{-}PRS} / N_{comb})$; or $ceiling(M_{SL\text{-}PRS} / N_{comb})$; or $ceiling(\omega \cdot M_{SL\text{-}PRS} / N_{comb})$.

$M_{SL\text{-}PRS}$ represents the quantity of time domain subunits occupied by the PRS, $N_{comb}$ represents the frequency domain interval, $\omega$ is a real number greater than 0 and less than 1, *floor(x)* represents rounding down x, and *ceiling(x)* represents rounding up x.

For example, the frequency domain interval is configured by a higher layer, or is preconfigured, or is predefined.

With reference to the third aspect, in some implementations of the third aspect, the method further includes: The first device sends fifth indication information. The fifth indication information is used to determine the quantity of time domain subunits related to the PRS.

For example, if the quantity of time domain subunits related to the PRS is related to $\omega$, the first device can send the fifth indication information, so that the second device can determine the quantity of time domain subunits related to the PRS based on the fifth indication information.

In a possible implementation, the first parameter further includes at least one of the following: a quantity of time domain subunits related to a physical feedback channel, overheads indicated by a higher layer parameter, and a quantity of resources occupied by a DMRS.

For example, the physical feedback channel is a PSFCH.

Assuming that the first time domain unit is a slot, and the time domain subunit is a symbol, a quantity of symbols of the first physical shared channel in one slot is $N^{PSSCH}_{symbol} = N^{sh}_{symb} - N^{PSFCH}_{symb} - N^{SL-PRS}_{symb}$. $N^{PSSCH}_{symbol}$ represents the quantity of symbols of the first physical shared channel in one slot, $N^{sh}_{symb}$ is determined by a quantity of sidelink symbols in one slot, $N^{PSFCH}_{symb}$ represents the quantity of symbols related to the PSFCH, and $N^{SL-PRS}_{symb}$ represents the quantity of time domain subunits related to the PRS.

In a possible implementation, the first physical shared channel is a PSSCH, and that the first device determines, based on the first parameter, the quantity of coded modulation symbols of the control information transmitted on the first physical shared channel includes: The first device determines the quantity of coded modulation symbols of the control information transmitted on the first physical shared channel based on the first parameter and at least one of the following parameters: a quantity of bits of the control information, a quantity of cyclic redundancy check bits of the control information, a parameter indicated by 1st-stage SCI, a quantity of subcarriers that are used to send the control information at a symbol *l* and that are of the first physical shared channel, a bit rate, a quantity of unoccupied REs in an RB in which a last coded symbol of the control information is located, a modulation order, a scaling factor configured through higher layer signaling, a quantity of symbols of the first physical shared channel in one slot, a quantity of sidelink symbols in one slot, a quantity of symbols related to a physical feedback channel, and the quantity of time domain subunits related to the PRS.

Assuming that the first time domain unit is a slot, and the time domain subunit is a symbol, the quantity of coded modulation symbols of the control information is

$$Q'_{SCI2} = \min\left\{ \left\lceil \frac{(Q_{SCI2} + L_{SCI2}) \cdot \beta^{SCI2}_{offset}}{Q^{SCI2}_m \cdot R} \right\rceil, \left\lceil \alpha \sum_{l=0}^{N^{PSSCH}_{symbol}-1} M^{SCI2}_{sc}(l) \right\rceil \right\} + \gamma$$

. $Q'_{SCI2}$ represents the quantity of coded modulation symbols of the control information, $Q_{SCI2}$ represents the quantity of bits of the control information, $L_{SCI2}$ represents the quantity of cyclic redundancy check bits of the control information, $\beta^{SCI2}_{offset}$ is the parameter indicated by the 1st-stage SCI, $M^{SCI2}_{sc}(l)$ represents the quantity of subcarriers that are used to send the control information at the symbol *l* and that are of the first physical shared channel, R represents the code rate, $\gamma$ is the quantity of unoccupied REs in the RB in which the last coded symbol of the control information is located, $Q^{SCI2}_m$ represents the modulation order, and $\alpha$ is the scaling factor configured through higher layer signaling.

With reference to the third aspect, in some implementations of the third aspect, the method further includes: The first device sends third indication information. The first device determines, based on the first parameter, the quantity of coded modulation symbols of the control information transmitted on the first physical shared channel includes: When the third indication information is a first value, the first device determines the quantity of coded modulation symbols of the control information based on the first parameter.

According to the foregoing technical solution, the second device can determine, based on the third indication information, that the first device determines the quantity of coded modulation symbols of the control information based on the first parameter. Further, the second device can also determine the quantity of coded modulation symbols of the control information based on the first parameter, to ensure that the first device and the second device determine a same quantity of coded modulation symbols of the control information.

With reference to the third aspect, in some implementations of the third aspect, the method further includes: The first device sends fourth indication information. The fourth indication information indicates a multiplexing manner of the PRS and the second physical shared channel in the first time domain unit, and the multiplexing manner is time division multiplexing or frequency division multiplexing.

For example, if the multiplexing manner of the PRS and the second physical shared channel in the first time domain unit is independently determined by the first device, the first device can send the fourth indication information, so that the second device can determine the multiplexing manner of the PRS and the second physical shared channel in the first time domain unit based on the fourth indication information.

With reference to the third aspect, in some implementations of the third aspect, the method further includes: The first device determines the multiplexing manner of the PRS and the second physical shared channel in the first time domain unit. The multiplexing manner is time division multiplexing or frequency division multiplexing. The multiplexing manner is configured through higher layer signaling, or is preconfigured, or is predefined, or corresponds to the first time domain unit.

According to a fourth aspect, a data transmission method is provided. The method may be performed by a second device, or may be performed by a component (for example, a chip or a circuit) of the second device. Alternatively, in some implementations, the second device may be a chip or a circuit. This is not limited in this embodiment of this application. For ease of description, an example in which the method is performed by the second device is used as an example below for description.

The method includes: The second device receives control information from a first device through a first physical shared channel. The second device determines a quantity of coded modulation symbols of the control information based on a first parameter. The first parameter includes a quantity of time domain subunits occupied by a PRS. The PRS and a second physical shared channel are located in a first time domain unit. The second physical shared channel is used for transmission of the control information. The second device demodulates the control information based on the quantity of coded modulation symbols of the control information.

For beneficial effects of the fourth aspect and the implementations of the fourth aspect, refer to the descriptions of the third aspect.

For example, the first physical shared channel and the second physical shared channel are a same channel; or the first physical shared channel is used for initial transmission of the control information, and the second physical shared channel is used for retransmission of the control information.

For example, the quantity of time domain subunits occupied by the PRS is configured through higher layer signaling, or is preconfigured, or is predefined.

With reference to the fourth aspect, in some implementations of the fourth aspect, in the first time domain unit, the PRS and the second physical shared channel are time division multiplexed, and that the second device determines the quantity of coded modulation symbols of the control information based on the first parameter includes: The second device determines a quantity of time domain subunits related to the PRS based on the quantity of time domain subunits occupied by the PRS. The second device determines the quantity of coded modulation symbols of the control information based on the quantity of time domain subunits related to the PRS.

With reference to the fourth aspect, in some implementations of the fourth aspect, in the first time domain unit, the PRS and the second physical shared channel are time division multiplexed, and the method further includes: The second device receives first indication information from the first device. The first indication information is used to determine the quantity of time domain subunits related to the PRS. That the second device determines the quantity of coded modulation symbols of the control information based on the first parameter includes: The second device determines the quantity of time domain subunits related to the PRS based on the quantity of time domain subunits occupied by the PRS and the first indication information. The second device determines the quantity of coded modulation symbols of the control information based on the quantity of time domain subunits related to the PRS.

The quantity of time domain subunits related to the PRS is any one of the following: $M_{SL-PRS}$; or $M_{SL-PRS}+k$, where k is a positive integer; or $M^1_{SL-PRS}$, where $M^1_{SL-PRS} < M_{SL-PRS}$, where $M_{SL-PRS}$ represents the quantity of time domain subunits occupied by the PRS.

With reference to the fourth aspect, in some implementations of the fourth aspect, in the first time domain unit, the PRS and the second physical shared channel are frequency division multiplexed, the first parameter further includes a frequency domain interval of the PRS, and that the second device determines the quantity of coded modulation symbols of the control information based on the first parameter includes: The second device determines the quantity of time domain subunits related to the PRS based on the quantity of time domain subunits occupied by the PRS and the frequency domain interval. The second device determines the quantity of coded modulation symbols of the control information based on the quantity of time domain subunits related to the PRS.

With reference to the fourth aspect, in some implementations of the fourth aspect, in the first time domain unit, the PRS and the second physical shared channel are frequency division multiplexed, and the method further includes: The second device receives fifth indication information from the first device. The fifth indication information is used to determine the quantity of time domain subunits related to the PRS. That the second device determines the quantity of coded modulation symbols of the control information based on the first parameter includes: The second device determines the quantity of time domain subunits related to the PRS based on the quantity of time domain subunits occupied by the PRS, the frequency domain interval, and the fifth indication information. The second device determines the quantity of coded modulation symbols of the control information based on the quantity of time domain subunits related to the PRS.

The quantity of time domain subunits related to the SL-PRS is any one of the following: $M_{SL-PRS}/N_{comb}$; or $\omega \cdot M_{SL-PRS}/N_{comb}$; or $floor(M_{SL-PRS}/N_{comb})$; or $floor(\omega \cdot M_{SL-PRS}/N_{comb})$; or $ceiling(M_{SL-PRS}/N_{comb})$; or $ceiling(\omega \cdot M_{SL-PRS}/N_{comb})$.

represents the quantity of time domain subunits occupied by the PRS, $N_{comb}$ represents the frequency domain interval, $\omega$ is a real number greater than 0 and less than 1, $floor(x)$ represents rounding down x, and $ceiling(x)$ represents rounding up x.

For example, the frequency domain interval is configured by a higher layer, or is preconfigured, or is predefined.

In a possible implementation, the first parameter further includes at least one of the following: a quantity of time domain subunits related to a physical feedback channel, overheads indicated by a higher layer parameter, and a quantity of resources occupied by a DMRS.

Assuming that the first time domain unit is a slot, and the time domain subunit is a symbol, a quantity of symbols of the first physical shared channel in one slot is $N^{PSSCH}_{symbol} = N^{sh}_{symb} - N^{PSFCH}_{symb} - N^{SL-PRS}_{symb}$. $N^{PSSCH}_{symbol}$ represents the quantity of symbols of the first physical shared channel in one slot, $N^{sh}_{symb}$ is determined by a quantity of sidelink symbols in one slot, $N^{PSFCH}_{symb}$ represents the quantity of symbols related to the physical feedback channel, and $N^{SL-PRS}_{symb}$ represents the quantity of time domain subunits related to the PRS.

In a possible implementation, the first physical shared channel is a PSSCH, and that the first device determines, based on the first parameter, the quantity of coded modulation symbols of the control information transmitted on the first physical shared channel includes: The first device determines the quantity of coded modulation symbols of the control information transmitted on the first physical shared channel based on the first parameter and at least one of the following parameters: a quantity of bits of the control information, a quantity of cyclic redundancy check bits of the control information, a parameter indicated by 1st-stage SCI, a quantity of subcarriers that are used to send the control information at a symbol $l$ and that are of the first physical shared channel, a bit rate, a quantity of unoccupied REs in an RB in which a last coded symbol of the control information is located, a modulation order, a scaling factor configured through higher layer signaling, a quantity of symbols of the first physical shared channel in one slot, a quantity of sidelink symbols in one slot, a quantity of symbols related to a physical feedback channel, and the quantity of time domain subunits related to the PRS.

Assuming that the first time domain unit is a slot, and the time domain subunit is a symbol, the quantity of coded modulation symbols of the control information is

$$Q'_{SCI2} = \min\left\{ \left\lceil \frac{(Q_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma \quad . \quad Q'_{SCI2}$$ represents the quantity of coded modulation symbols of the control information, $Q_{SCI2}$ represents the quantity of bits of the control information, $L_{SCI2}$ represents the quantity of cyclic redundancy check bits of the control information, $\beta_{offset}^{SCI2}$ is the parameter indicated by the 1st-stage sidelink control information SCI, $M_{sc}^{SCI2}(l)$ represents the quantity of subcarriers that are used to send the control information at the symbol $l$ and that are of the first physical shared channel, R represents the code rate, $\gamma$ is the quantity of unoccupied REs in the resource block RB in which the last coded symbol of the control information is located, $Q_m^{SCI2}$ represents the modulation order, and $\alpha$ is the scaling factor configured through higher layer signaling.

With reference to the fourth aspect, in some implementations of the fourth aspect, the method further includes: The second device receives third indication information from the first device. That the second device determines the quantity of coded modulation symbols of the control information based on the first parameter includes: When the third indication information is a first value, the second device determines the quantity of coded modulation symbols of the control information based on the first parameter.

With reference to the fourth aspect, in some implementations of the fourth aspect, the method further includes: The second device determines a multiplexing manner of the PRS and the second physical shared channel in the first time domain unit. The multiplexing manner is time division multiplexing or frequency division multiplexing. The multiplexing manner is configured through higher layer signaling, or is preconfigured, or is predefined, or corresponds to the first time domain unit, or is indicated by the first device.

With reference to the fourth aspect, in some implementations of the fourth aspect, the multiplexing manner is indicated by the first device, and the method further includes: The second device receives fourth indication information from the first device. The fourth indication information indicates the multiplexing manner.

According to a fifth aspect, a communication apparatus is provided. The apparatus is configured to perform the method according to any one of the possible implementations of the first aspect to the fourth aspect. Specifically, the apparatus may include units and/or modules configured to perform the method according to any one of foregoing aspects and the possible implementations of the foregoing aspects, for example, a processing unit and/or a communication unit.

In an implementation, the apparatus is a device (for example, a first device and/or a second device). When the apparatus is a device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a first device and/or a second device). When the apparatus is a chip, a chip system, or a circuit used in a device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method according to any one of the foregoing aspects and the possible implementations of the foregoing aspects.

Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, a first device and/or a second device).

In another implementation, the apparatus is a chip, a chip system, or a circuit used in a device (for example, a first device and/or a second device).

According to a seventh aspect, this application provides a processor, configured to perform the methods provided in the foregoing aspects.

Unless otherwise specified, or if operations such as sending and obtaining/receiving related to the processor do not contradict an actual function or internal logic of the operations in related descriptions, the operations may be understood as operations such as outputting, receiving, and inputting of the processor, or may be understood as operations such as sending and receiving performed by a radio frequency circuit and an antenna. This is not limited in this application.

According to an eighth aspect, a computer-readable storage medium is provided. The computer-readable medium stores program code to be executed by a device. The program code is used to execute the method according to any one of the foregoing aspects and the possible implementations of the foregoing aspects.

According to a ninth aspect, a computer program product including instructions is provided. When the computer program product runs on a computer, the computer is enabled to perform the method according to any one of the foregoing aspects and the possible implementations of the foregoing aspects.

According to a tenth aspect, a communication system is provided, including the foregoing first device and second device. The first device is configured to perform the method according to any one of the first aspect and the possible implementations of the first aspect, or is configured to perform the method according to any one of the third aspect and the possible implementations of the third aspect. The second device is configured to perform the method according to any one of the second aspect and the possible implementations of the second aspect, or is configured to perform the method according to any one of the fourth aspect and the possible implementations of the fourth aspect.

**BRIEF DESCRIPTION OF DRAWINGS**

FIG. 1 is a diagram of a communication system to which an embodiment of this application is applicable;
FIG. 2 is a diagram of a multiplexing manner of an SL-PRS and a PSSCH in a slot;
FIG. 3 is a schematic flowchart of a method according to an embodiment of this application;
FIG. 4 is a diagram of a relationship between a first PSSCH and a second PSSCH;
FIG. 5 is a diagram of a slot that includes no PSFCH and a slot that includes a PSFCH;
FIG. 6 is a schematic flowchart of a method according to another embodiment of this application;
FIG. 7 is a schematic flowchart of a method according to another embodiment of this application;
FIG. 8 is a schematic flowchart of a method according to another embodiment of this application;
FIG. 9 is a diagram of a communication apparatus according to an embodiment of this application;
FIG. 10 is a schematic block diagram of a communication apparatus according to another embodiment of this application; and
FIG. 11 is a diagram of a chip system according to an embodiment of this application.

**DESCRIPTION OF EMBODIMENTS**

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to sidelink (sidelink, SL) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. In an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device.

A terminal device in embodiments of this application includes various devices having a wireless communication function, and the terminal device may be configured to be connected to a person, an object, a machine, and the like. The terminal device may be widely used in various scenarios, for example, cellular communication, SL, V2X, peer to peer (peer to peer, P2P), M2M, MTC, IoT, virtual reality (virtual reality, VR), augmented reality (augmented reality, AR), industrial control, self driving, telemedicine, smart grid, smart furniture, smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device, or may be an apparatus built in the foregoing device (for example, a communication module, a modem, or a chip in the foregoing device), or may be another processing device connected to the wireless modem.

It should be understood that in some scenarios, the terminal device may be further configured to serve as a base station. For example, the terminal device may serve as a scheduling entity, and provide a sidelink signal between terminal devices in a scenario like V2X, SL, or P2P.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip, or may include the chip and another discrete component.

The terminal device may be deployed on land, including indoor or outdoor and handheld or vehicle-mounted devices, may be deployed on a water surface, or may be deployed on an airplane, a balloon, and a satellite in the air. A scenario in which the terminal device is located is not limited in embodiments of this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between the associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including a single item (piece) or any combination of multiple items (pieces). For example, at least one (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

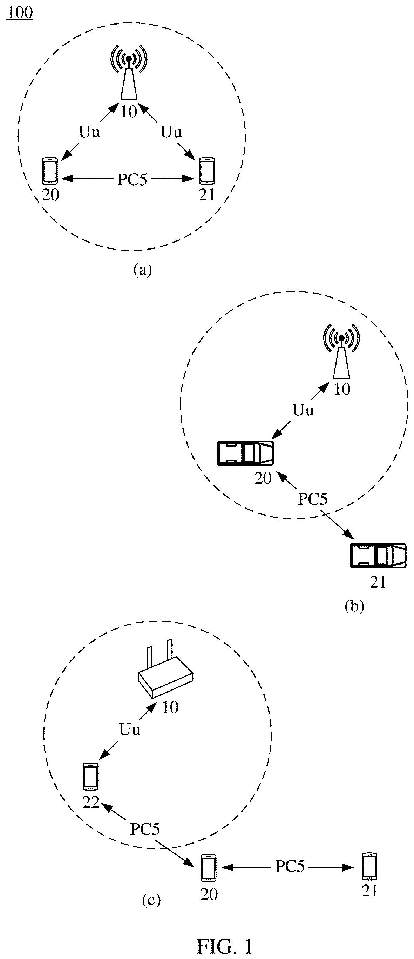

FIG. 1 is a diagram of a communication system 100 to which an embodiment of this application is applicable.

A communication system 100 shown in (a) in FIG. 1 includes a network device 10, a terminal device 20, and a terminal device 21. Both the terminal device 20 and the terminal device 21 are within a coverage area of the network device 10. The network device 10 communicates with the terminal devices through a Uu air interface, and the terminal device 20 communicates with the terminal device 21 through a PC5 interface. A communication system 100 shown in (b) in FIG. 1 includes a network device 10, a terminal device 20, and a terminal device 21. The terminal device 20 is within a coverage area of the network device 10, and the terminal device 21 is outside the coverage area of the network device 10. A communication system 100 shown in (c) in FIG. 1 includes a network device 10, a terminal device 20, a terminal device 21, and a terminal device 22. Neither the terminal device 20 nor the terminal device 21 is within a coverage area of the network device 10, and the terminal device 22 is within the coverage area of the network device 10.

In a scenario shown in (a) or (b) in FIG. 1, the terminal device 20 may communicate with the terminal device 21 by using a resource scheduled by the network device, and the resource may be referred to as a licensed resource or a licensed band; or the terminal device 20 may select a resource by itself, to be specific, select the resource from a resource pool, to communicate with the terminal device 21, and the resource may be referred to as an unlicensed resource or an unlicensed band. In a scenario shown in (c) in FIG. 1, because both the terminal device 20 and the terminal device 21 are outside the network coverage, the terminal device 20 and the terminal device 21 may perform communication in a self-resource selection manner.

It should be understood that a quantity of terminal devices and a quantity of network devices shown in FIG. 1 are merely examples, and the quantity of terminal devices and the quantity of network devices in the communication system are not limited in this application.

In daily life and applications, location information becomes increasingly important basic information. Applications such as a navigation service and a location-based service (location-based service, LBS) need to provide corresponding services for users based on location information of the users.

Currently, a global navigation satellite system (global navigation satellite system, GNSS) is a common solution for determining location information. Positioning accuracy of the GNSS may not meet requirements of some applications that have high accuracy requirements. To resolve this problem, it is proposed in the industry that positioning is performed through transmission of a positioning reference signal (sidelink positioning reference signal, PRS).

When one slot includes a symbol used for transmission of the PRS, how to determine a size (TB size, TBS) of a transport block (transport block, TB) transmitted in the slot becomes an urgent problem to be resolved.

In view of this, an embodiment of this application provides a data transmission method, so that a TBS of a to-be-transmitted TB can be determined based on a quantity of time domain subunits occupied by a PRS, to ensure transmission performance of the to-be-transmitted TB.

For ease of understanding embodiments of this application, the following briefly describes several terms in this application.

1. Time domain unit and frequency domain unit

Data or information may be carried on a time-frequency resource.

In time domain, the time-frequency resource may include one or more time domain units (which may also be referred to as time units). A time domain unit may be a symbol, a mini-slot (mini-slot), a sub-slot (sub-slot), a slot (slot), a partial slot (partial slot), a subframe (subframe), a radio frame (frame), or the like. One time domain unit may include a plurality of time domain subunits. For example, if the time domain unit is a slot, the time domain subunit may be a mini-slot, a partial slot, or a symbol. For another example, if the time domain unit is a subframe, the time domain subunit may be a slot, a mini-slot, a partial slot, or a symbol. For another example, if the time domain unit is a slot, a mini-slot, or a partial slot, the time domain subunit may be a symbol, a partial symbol, or a sampling point.

In frequency domain, the time-frequency resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like. Optionally, in this application, the resource element may also be referred to as a subcarrier.

2. TB and TBS

In a data or information transmission process, the TB is a basic transmission unit used for transmission on a data channel (for example, a physical shared channel). The TB includes to-be-sent information in the transmission process. Optionally, the TB may further include a cyclic redundancy check (cyclic redundancy check, CRC) bit of a specific length. Optionally, the TB is a set of several information bits before encoding. Optionally, one TB may include one code block, or may include a plurality of code blocks. Optionally, service data or a control message or signaling may be transmitted on the TB. This is not limited in this application.

The TBS is a size of the TB, and is used to determine a size of information that can be transmitted. Optionally, a value of the TBS may be determined based on a size of the to-be-transmitted TB. Optionally, the value of the TBS may alternatively be determined based on a transmission resource of the data channel within transmission bandwidth of the data channel and a bit rate, a modulation order, a spatial layer quantity, and the like that are used for transmission of the TB.

It should be noted that the following uses an example in which the data transmission method provided in embodiments of this application is applied to sidelink (sidelink, SL) transmission with reference to the accompanying drawings for description. The data transmission method provided in embodiments of this application may also be applied to uplink (uplink, UL) transmission, downlink (downlink, DL) transmission, or relay link transmission.

It may be understood that, when the data transmission method provided in embodiments of this application is applied to SL transmission, the physical shared channel may be a physical sidelink shared channel (physical sidelink shared channel, PSSCH), the PRS may be a sidelink positioning reference signal (sidelink PRS, SL-PRS or SLPRS), control information transmitted on the physical shared channel may be sidelink control information (sidelink control information, SCI), and a physical feedback channel may be a physical sidelink feedback channel (physical sidelink feedback channel, PSFCH).

When the data transmission method provided in embodiments of this application is applied to DL transmission, in the following embodiments, the PSSCH may be replaced with a physical downlink shared channel (physical downlink shared channel, PDSCH), the SL-PRS may be replaced with a downlink positioning reference signal (downlink PRS, DL-PRS or DLPRS), SCI may be replaced with downlink control information (downlink control information, DCI), and the PSFCH may be replaced with a physical downlink feedback channel or a downlink control channel.

When the data transmission method provided in embodiments of this application is applied to UL transmission, in the following embodiments, the PSSCH may be replaced with a physical uplink shared channel (physical uplink shared channel, PUSCH), the SL-PRS may be replaced with an uplink positioning reference signal (uplink PRS, UL-PRS or ULPRS), SCI may be replaced with uplink control information (uplink control information, UCI), and the PSFCH may be replaced with a physical uplink feedback channel or an uplink control channel.

It should be further noted that a device (for example, a first device and/or a second device) in embodiments of this application may be a terminal device, or a component (for example, a chip or a circuit) of the terminal device; or a device (for example, a first device and/or a second device) in embodiments of this application may be a network device, or a component (for example, a chip or a circuit) of the network device. Alternatively, a device (for example, a first device and/or a second device) in embodiments of this application may be a chip or a circuit.

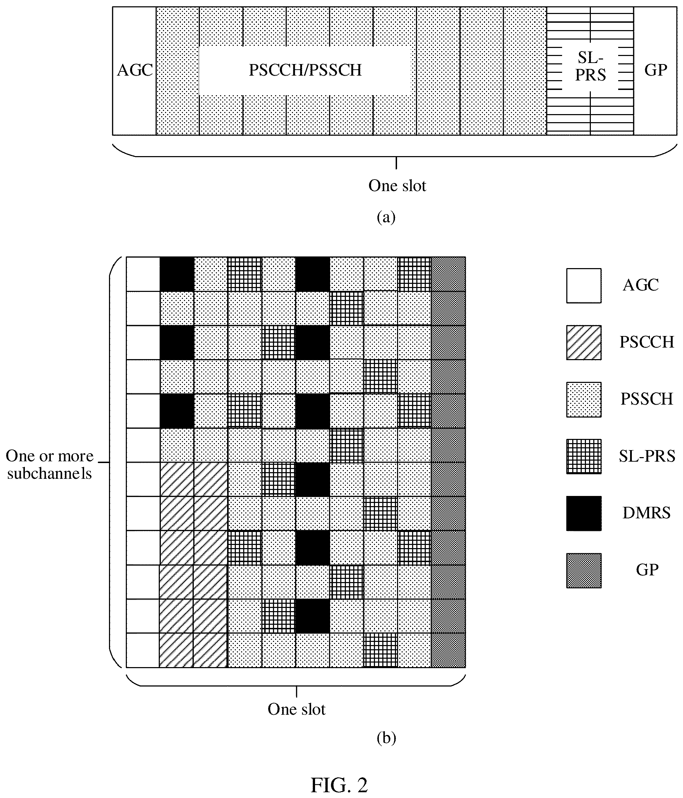

Before the data transmission method provided in embodiments of this application is described, a multiplexing manner of an SL-PRS and a PSSCH in a time domain unit is first described with reference to FIG. 2.

As shown in (a) in FIG. 2, the multiplexing manner of the SL-PRS and the PSSCH in one slot (the slot is an example of a time domain unit) is time division multiplexing (time division multiplexing, TDM). To be specific, the SL-PRS and the PSSCH occupy same bandwidth, and the SL-PRS and the PSSCH separately occupy different symbols in the slot (the symbol is an example of a time domain subunit).

As shown in (b) in FIG. 2, the multiplexing manner of the SL-PRS and the PSSCH in one slot is frequency division multiplexing (frequency division multiplexing, FDM). To be specific, the SL-PRS and the PSSCH occupy same bandwidth. In addition, in a partial symbol of the slot, the SL-PRS and the PSSCH separately occupy different subcarriers (the subcarrier is an example of a frequency domain subunit).

As shown in FIG. 2, a slot including an SL-PRS and a PSSCH may further include a physical sidelink control channel (physical sidelink control channel, PSCCH), an automatic gain control (automatic gain control, AGC) symbol, and a guard period (guard period, GP) symbol. The AGC symbol is a 1st symbol in the slot, and is used by a receiver to perform AGC. The GP symbol is a last symbol in the slot, and is used for receiving/transmitting conversion between slots. The GP symbol may also be referred to as a null symbol.

As shown in (b) in FIG. 2, a slot including an SL-PRS and a PSSCH may further include a demodulation reference signal (demodulation reference signal, DMRS). The DMRS may occupy two symbols, three symbols, or four symbols in one slot. An example in which the DMRS occupies two symbols in one slot is used in (b) in FIG. 2.

Optionally, the slot including the SL-PRS and the PSSCH may further include a physical sidelink feedback channel (physical sidelink feedback channel, PSFCH) (not shown in FIG. 2).

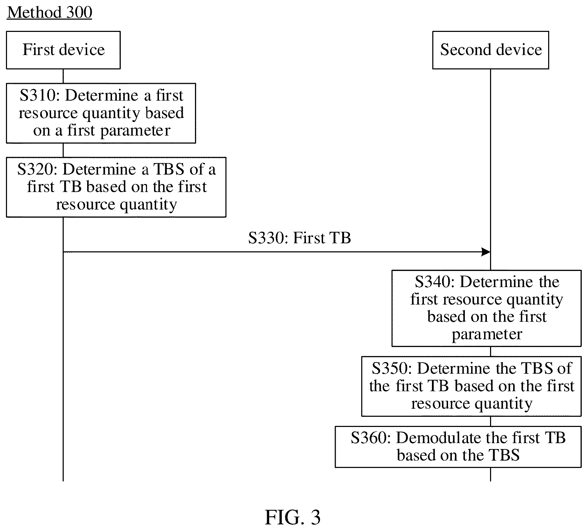

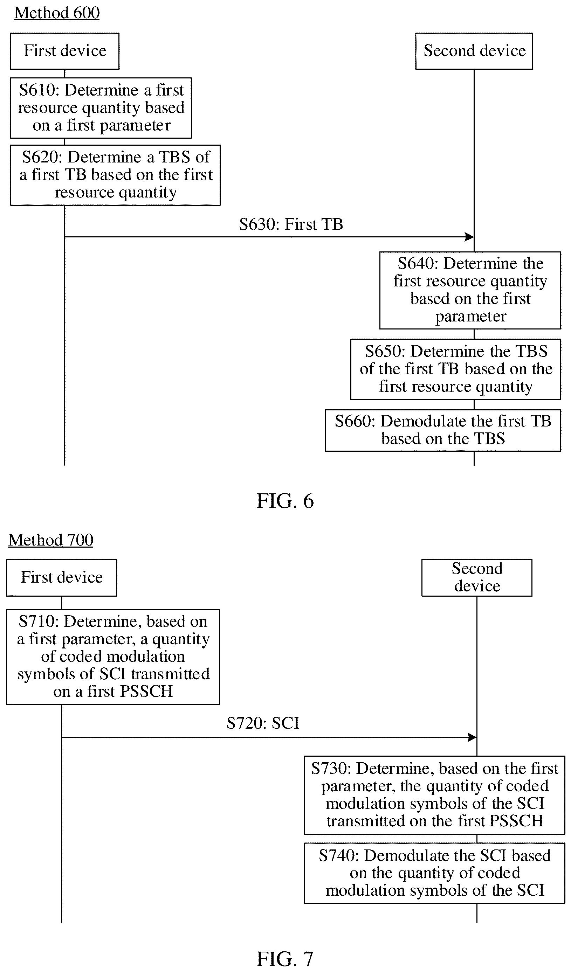

With reference to FIG. 3, the following describes a manner of determining, when a multiplexing manner of the SL-PRS and a PSSCH in a time domain unit is TDM, a TBS of a TB based on a quantity of time domain subunits occupied by an SL-PRS. With reference to FIG. 6, the following describes a manner of determining, when a multiplexing manner of the SL-PRS and a PSSCH in a time domain unit is FDM, a TBS of a TB based on a quantity of time domain subunits occupied by an SL-PRS.

FIG. 3 is a schematic flowchart of a data transmission method 300 according to an embodiment of this application. As shown in FIG. 3, the method 300 may include the following steps.

Optionally, if a first device does not obtain a multiplexing manner of an SL-PRS and a second PSSCH in a first time domain unit before performing S310, the method 300 further includes: The first device obtains the multiplexing manner of the SL-PRS and the second PSSCH in the first time domain unit.

The second PSSCH is used for transmission of a first TB. For example, the second PSSCH is used for initial transmission of the first TB, or the second PSSCH is used for retransmission of the first TB. This is not limited in this embodiment of this application.

The following describes how the first device obtains the multiplexing manner of the SL-PRS and the second PSSCH in the first time domain unit.

In a possible implementation, the multiplexing manner of the SL-PRS and the second PSSCH in the first time domain unit is configured through higher layer signaling.

In this implementation, the method 300 further includes: A network device sends indication information #1 to the first device through the higher layer signaling. Correspondingly, the first device receives the indication information #1 from the network device. The indication information #1 is used to determine that the multiplexing manner of the SL-PRS and the second PSSCH in the first time domain unit is TDM or FDM. The higher layer signaling may be a radio resource control (radio resource control, RRC) message or a media access control (media access control, MAC) control element (control element, CE) message. For example, the higher layer signaling is positioning-related higher layer signaling.

For example, the indication information #1 indicates the first device to perform TDM multiplexing on a shared resource pool. Further, if the first time domain unit is located in the shared resource pool, the first device may determine that the multiplexing manner of the SL-PRS and the second PSSCH in the first time domain unit is TDM.

For another example, if the indication information #1 indicates that a frequency domain interval of the SL-PRS is 1, the first device may determine that the multiplexing manner of the SL-PRS and the second PSSCH in the first time domain unit is TDM. Alternatively, if the indication information #1 indicates that the frequency domain interval of the SL-PRS is greater than 1, the first device may determine that the multiplexing manner of the SL-PRS and the second PSSCH in the first time domain unit is FDM.

In a possible implementation, the multiplexing manner of the SL-PRS and the second PSSCH in the first time domain unit is preconfigured or predefined.

In a possible implementation, the multiplexing manner of the SL-PRS and the second PSSCH in the first time domain unit corresponds to the first time domain unit. For example, a correspondence between different time domain units and different multiplexing manners is preconfigured in the first device. In this case, the first device may determine, based on the correspondence, that the multiplexing manner corresponding to the first time domain unit is TDM, so that the first device determines that the multiplexing manner of the SL-PRS and the second PSSCH in the first time domain unit is TDM.

In a possible implementation, the first device autonomously determines the multiplexing manner of the SL-PRS and the second PSSCH in the first time domain unit.

For example, if a network device indicates, to the first device through higher layer signaling, that a shared resource pool supports both TDM multiplexing and FDM multiplexing, when the first time domain unit is located in the shared resource pool, the first device may autonomously determine that the multiplexing manner of the SL-PRS and the second PSSCH in the first time domain unit is TDM. For example, if the first device supports TDM but does not support FDM, the first device may autonomously determine that the multiplexing manner of the SL-PRS and the second PSSCH in the first time domain unit is TDM.

For another example, if the first device determines, based on a preconfigured correspondence between different time domain units and different multiplexing manners, that the first time domain unit corresponds to TDM and FDM, the first device may autonomously determine that the multiplexing manner of the SL-PRS and the second PSSCH in the first time domain unit is TDM.

Optionally, if the first device autonomously determines the multiplexing manner of the SL-PRS and the second PSSCH in the first time domain unit, the method 300 further includes: The first device sends fourth indication information. The fourth indication information indicates the multiplexing manner of the SL-PRS and the second PSSCH in the first time domain unit. For example, the fourth indication information is carried in sidelink control information (sidelink control information, SCI) sent by the first device. The SCI may be 1st-stage SCI or 2nd-stage SCI. For example, the first device sends the fourth indication information in a second time domain unit. The second time domain unit is before the first time domain unit, or the second time domain unit is the same as the first time domain unit.

In a possible implementation, the multiplexing manner of the SL-PRS and the second PSSCH in the first time domain unit is indicated by a third device.

In this implementation, the method 300 further includes: The third device sends indication information #2 to the first device. Correspondingly, the first device receives the indication information #2 from the third device. The indication information #2 is used to determine that the multiplexing manner of the SL-PRS and the second PSSCH in the first time domain unit is TDM or FDM. For more descriptions of the indication information #2, refer to the indication information #1.

It may be understood that after obtaining the multiplexing manner of the SL-PRS and the second PSSCH in the first time domain unit, the first device may select, based on the multiplexing manner, a proper method to determine a TBS of the first TB transmitted on a first PSSCH, to improve accuracy of the determined TBS.

It should be understood that if the first device determines that the multiplexing manner of the SL-PRS and the second PSSCH in the first time domain unit is TDM, the first device continues to perform S310 and S320, to determine the TBS of the first TB transmitted on the first PSSCH.

S310: The first device determines a first resource quantity based on a first parameter.

The first resource quantity is a quantity of resources of the first PSSCH within a first frequency domain unit.

The first PSSCH is used for transmission of the first TB. For example, the first PSSCH is used for retransmission of the first TB, or the first PSSCH is used for initial transmission of the first TB.

The first PSSCH and the second PSSCH are a same PSSCH, or the first PSSCH and the second PSSCH are different PSSCHs. If the first PSSCH and the second PSSCH are different PSSCHs, the first PSSCH is used for initial transmission of the first TB, and the second PSSCH is used for retransmission of the first TB. In other words, the second time domain unit in which the first PSSCH is located is before the first time domain unit.

It should be noted that when the first PSSCH and the second PSSCH are different PSSCHs, the TBS of the first TB transmitted on the first PSSCH is the same as a TBS of the first TB transmitted on the second PSSCH. In this case, it can be ensured that when a receiver receives TBs through the first PSSCH and the second PSSCH, although the first PSSCH and the second PSSCH actually occupy different quantities of resources, the received TBs are still a same TB, and TBSs are still the same. The receiver needs to only receive and combine, in a rate de-matching manner, the same TB transmitted on the first PSSCH and the second PSSCH. In this way, the receiver can obtain a gain for receiving and combining the same TB, to improve receiving performance.

It should be understood that when the first PSSCH is located in the second time domain unit, the first resource quantity may be understood as a quantity of resources of the first PSSCH on a first time-frequency resource, and the first time-frequency resource includes the second time domain unit and the first frequency domain unit.

The first parameter includes a quantity of time domain subunits occupied by the SL-PRS. The quantity of time domain subunits occupied by the SL-PRS may be configured through higher layer signaling, or may be preconfigured, or may be predefined. This is not limited in this embodiment of this application. For example, a value of the quantity of time domain subunits occupied by the SL-PRS is a value in a predefined or preconfigured set {2, 4, 6, 8}.

It may be understood that the SL-PRS is located in the first time domain unit, and therefore, the quantity of time domain subunits occupied by the SL-PRS is a quantity of time domain subunits occupied by the SL-PRS in the first time domain unit.

The following describes two scenarios to which this embodiment of this application may be applied.

In a possible scenario, if the second time domain unit in which the first PSSCH is located includes no SL-PRS, the first device determines the first resource quantity based on a quantity of time domain subunits that are occupied by the SL-PRS and that are included in the first time domain unit. It may be understood that, in this scenario, the first PSSCH and the second PSSCH are different PSSCHs, and the second time domain unit in which the first PSSCH is located is before the first time domain unit.

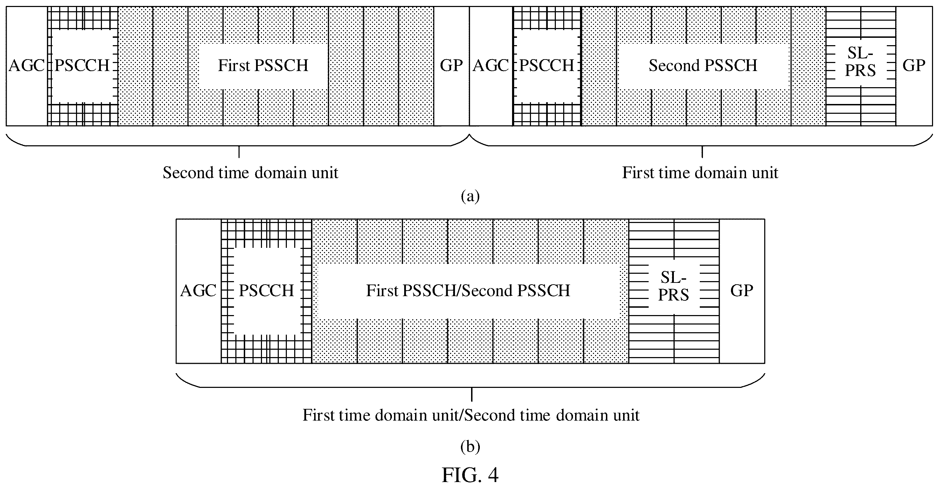

As shown in (a) in FIG. 4, the second time domain unit in which the first PSSCH is located includes no SL-PRS, but the first time domain unit in which the second PSSCH is located includes the SL-PRS. In this case, the first device may determine the first resource quantity based on the quantity of time domain subunits that are occupied by the SL-PRS and that are included in the first time domain unit.

In another possible scenario, if the second time domain unit in which the first PSSCH is located includes the SL-PRS, the first device determines the first resource quantity based on a quantity of time domain subunits that are occupied by the SL-PRS and that are included in the second time domain unit. It may be understood that in this scenario, the first time domain unit and the second time domain unit are a same time domain unit, and the second PSSCH and the first PSSCH are a same PSSCH.

As shown in (b) in FIG. 4, if the second time domain unit in which the first PSSCH is located includes the SL-PRS, the first device may determine the quantity of resources of the first PSSCH within the first frequency domain unit based on the quantity of time domain subunits that are occupied by the SL-PRS and that are included in the second time domain unit. In the example shown in (b) in FIG. 4, the first time domain unit and the second time domain unit are a same time domain unit, and the second PSSCH and the first PSSCH are a same PSSCH, or the first PSSCH is the second PSSCH.

The following describes a manner in which the first device determines the first resource quantity based on the quantity of time domain subunits occupied by the SL-PRS.

For example, the first device determines a quantity of time domain subunits related to the SL-PRS based on the quantity of time domain subunits occupied by the SL-PRS. Further, the second device determines the first resource quantity based on the quantity of time domain subunits related to the SL-PRS.

The quantity of time domain subunits related to the SL-PRS may be understood as a quantity of time domain subunits that cannot be used for transmission of the first TB due to transmission of the SL-PRS, or may be understood as a quantity of time domain subunit "overheads" occupied by an equivalent SL-PRS.

In a possible implementation, the quantity of time domain subunits related to the SL-PRS is the quantity of time domain subunits occupied by the SL-PRS.

For example, if there is no null symbol or AGC symbol before the time domain subunit occupied by the SL-PRS, the quantity of time domain subunits related to the SL-PRS is the quantity of time domain subunits occupied by the SL-PRS.

For another example, if a time domain unit in which each of all PSSCHs used for transmission of the first TB is located includes an SL-PRS, and there is no null symbol or AGC symbol before a time domain subunit that is occupied by the SL-PRS and that is included in a time domain unit in which a PSSCH #1 is located, the quantity of time domain subunits related to the SL-PRS is the quantity of time domain subunits occupied by the SL-PRS. The PSSCH #1 is one of all the PSSCHs used for transmission of the first TB.

The quantity of time domain subunits related to the SL-PRS is denoted as $N_{symb}^{SL-PRS}$, and the quantity of time domain subunits occupied by the SL-PRS is denoted as $M_{SL-PRS}$. In this case, $N_{symb}^{SL-PRS} = M_{SL-PRS}$.

In a possible implementation, the quantity of time domain subunits related to the SL-PRS is the quantity of time domain subunits occupied by the SL-PRS plus k. k is a positive integer. For example, k is 1 or 2.

For example, if there is a null symbol or an AGC symbol before the time domain subunit occupied by the SL-PRS, the quantity of time domain subunits related to the SL-PRS is the quantity of time domain subunits occupied by the SL-PRS plus k. A value of k is the same as a quantity of null symbols and/or AGC symbols before the time domain subunit occupied by the SL-PRS. For example, if there is one null symbol before the time domain subunit occupied by the SL-PRS, k=1. For another example, if there is one null symbol and one AGC symbol before the time domain subunit occupied by the SL-PRS, k=2. Optionally, the null symbol before the time domain subunit occupied by the SL-PRS is used for transmit power switching in a slot when the first device sends the PSSCH and the SL-PRS. The null symbol can be used to satisfy a transmit requirement for power switching of the first device when the PSSCH and the SL-PRS have different symbol power or different RE power.

For another example, if a time domain unit in which each of all PSSCHs used for transmission of the first TB is located includes an SL-PRS, and there is a null symbol or an AGC symbol before a time domain subunit that is occupied by the SL-PRS and that is included in a time domain unit in which a PSCCH #2 is located, the quantity of time domain subunits related to the SL-PRS is the quantity of time domain subunits occupied by the SL-PRS plus k. The PSSCH #2 is one of all the PSSCHs used for transmission of the first TB.

The quantity of time domain subunits related to the SL-PRS is denoted as $N_{symb}^{SL-PRS}$, and the quantity of time domain subunits occupied by the SL-PRS is denoted as $M_{SL\text{-}PRS}$. In this case, $N_{symb}^{SL-PRS} = M_{SL\text{-}PRS} + k$.

In a possible implementation, the quantity of time domain subunits related to the SL-PRS is less than the quantity of time domain subunits occupied by the SL-PRS.

For example, if a time domain unit in which a PSSCH #3 in all PSSCHs used for transmission of the first TB is located includes no SL-PRS, the quantity of time domain subunits related to the SL-PRS is less than the quantity of time domain subunits occupied by the SL-PRS.

The quantity of time domain subunits related to the SL-PRS is denoted as $N_{symb}^{SL-PRS}$, and the quantity of time domain subunits occupied by the SL-PRS is denoted as $M_{SL\text{-}PRS}$. In this case, $N_{symb}^{SL-PRS} = M_{SL\text{-}PRS}^{1}$, where $M_{SL\text{-}PRS}^{1} < M_{SL\text{-}PRS}$. A value of $M_{SL\text{-}PRS}^{1}$ is a value configured through higher layer signaling, or is a preconfigured value, or is a predefined value. For example, $M_{SL\text{-}PRS}^{1} = M_{SL\text{-}PRS}/2$ or $M_{SL\text{-}PRS}^{1} = M_{SL\text{-}PRS}/4$. If a value of is a value in {2, 4, 6, 8}, the value of $M_{SL\text{-}PRS}^{1}$ may be a value in a set {1, 2, 3, 4}.

In a possible implementation, the quantity of time domain subunits related to the SL-PRS is 0.

For example, if the second time domain unit includes no SL-PRS, the quantity of time domain subunits related to the SL-PRS is 0.

For another example, if a time domain unit in which each of all the PSSCHs used for transmission of the first TB is located includes no SL-PRS, the quantity of time domain subunits related to the SL-PRS is 0.

The following describes a manner in which the first device determines the first resource quantity based on the quantity of time domain subunits related to the SL-PRS.

Assuming that the time domain unit is a slot, and the time domain subunit is a symbol, a quantity of symbols of the first PSSCH in one slot (the slot is an example of the second time domain unit) is:

$$(N_{symb}^{sh} - N_{symb}^{SL-PRS}) \text{ Formula (1).}$$

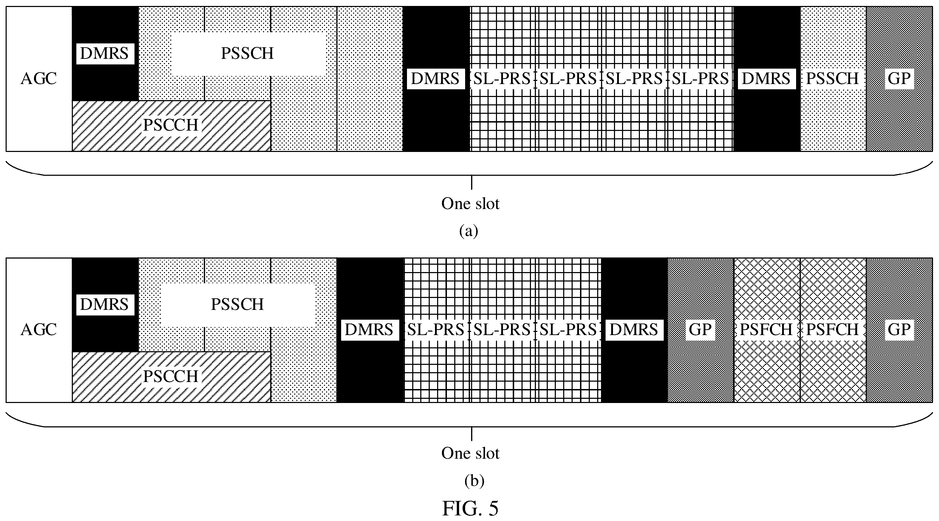

$N_{symb}^{sh}$ is determined by the quantity of sidelink symbols in one slot. For example, $N_{symb}^{sh}$ is equal to the quantity of sidelink symbols in one slot minus t, where t is a positive integer. For example, a value of t is 2, 3, or 4. As shown in FIG. 5, if a 1st symbol in a slot in which the first PSSCH is located is an AGC symbol, and a last symbol is a null symbol, $N_{symb}^{sh} = \text{Quantity of}$ sidelink length symbols ($sl\text{-}LengthSymbols$)–2. $sl\text{-}LengthSymbols$ represents a quantity of sidelink symbols in the slot in which the first PSSCH is located, and $sl\text{-}LengthSymbols$ is obtained by the first device from a higher layer parameter. $N_{symb}^{SL-PRS}$ represents the quantity of time domain subunits related to the SL-PRS.

Further, the first device may determine the first resource quantity based on the quantity of symbols of the first PSSCH in one slot. Assuming that the first frequency domain unit is a PRB, the first resource quantity satisfies the following condition:

$$N_{RE}^{'} = N_{SC}^{RB}(N_{symb}^{sh} - N_{symb}^{SL-PRS}) \text{ Formula (2)}.$$

$N_{RE}^{'}$ represents the first resource quantity, that is, represents a quantity of resource elements (resource elements, REs) of the first PSSCH within one PRB in one slot. $N_{sc}^{RB}$ represents a quantity of subcarriers within one PRB, for example, $N_{sc}^{RB} = 12$.

Optionally, the first parameter may further include at least one of the following: a quantity of time domain subunits related to a PSFCH, overheads indicated by the higher layer parameter, and a quantity of resources occupied by a DMRS.

It may be understood that when the first parameter further includes at least one of the foregoing parameters, and when the TBS of the first TB is determined, overheads that cannot be used for transmission of the first TB in the time domain unit in which the first PSSCH is located may be considered as much as possible, so that the accuracy of the determined TBS can be improved.

For example, when the first parameter further includes the quantity of time domain subunits related to the PSFCH, assuming that the time domain unit is a slot, and the time domain subunit is a symbol, the quantity of symbols of the first PSSCH in one slot (the slot is an example of the second time domain unit) is:

$$(N_{symb}^{sh} - N_{symb}^{PSFCH} - N_{symb}^{SL-PRS}) \text{ Formula (3)}.$$

$N_{symb}^{PSFCH}$ represents the quantity of symbols related to the PSFCH. For example, $N_{symb}^{PSFCH}$ is equal to a quantity of symbols occupied by the PSFCH in the slot in which the first PSSCH is located, or $N_{symb}^{PSFCH}$ is equal to the quantity of symbols occupied by the PSFCH in the slot in which the first PSSCH is located plus 1, or $N_{symb}^{PSFCH}$ is equal to 0. As shown in (a) in FIG. 5, if the slot in which the first PSSCH is located includes no PSFCH, $N_{symb}^{PSFCH}$ is equal to 0. As shown in (b) in FIG. 5, if the slot in which the first PSSCH is located includes the PSFCH, and there is one null symbol (that is, a GP symbol shown in (b) in FIG. 5) before the PSFCH, $N_{symb}^{PSFCH}$ is equal to the quantity of symbols occupied by the PSFCH in the slot in which the first PSSCH is located plus 1, that is, $N_{symb}^{PSFCH}$ is equal to 3. For another example, if a value of a higher layer parameter, sidelink-physical sidelink feedback channel-period (sl-PSFCH-Period), is 2 or 4, and if a physical sidelink feedback channel overhead indication (PSFCH overhead indication) field in an SCI format 1-A indicates "1", $N_{symb}^{PSFCH} = 3$; otherwise, $N_{symb}^{PSFCH} = 0$. If the value of the higher layer parameter sl-PSFCH-Period is 0, $N_{symb}^{PSFCH} = 0$. For another example, if the higher layer parameter sl-PSFCH-Period is 1, $N_{symb}^{PSFCH} = 3$.

Assuming that the first frequency domain unit is a PRB, the first resource quantity determined by the first device based on the quantity of symbols of the first PSSCH in one slot satisfies the following condition:

$$N_{RE}^{'} = N_{SC}^{RB}(N_{symb}^{sh} - N_{symb}^{PSFCH} - N_{symb}^{SL-PRS}) \text{ Formula (4)}.$$

For another example, when the first parameter further includes the overheads indicated by the higher layer parameter and the quantity of resources occupied by the DMRS, the first resource quantity determined by the first device based on the quantity of symbols of the first PSSCH in one slot satisfies the following condition:

$$N_{RE}^{'} = N_{SC}^{RB}(N_{symb}^{sh} - N_{symb}^{PSFCH} - N_{symb}^{SL-PRS}) - N_{oh}^{PRB} - N_{RE}^{DMRS} \text{ Formula (5)}.$$

$N_{RE}^{DMRS}$ represents a quantity of REs occupied by the DMRS within one PRB. $N_{RE}^{DMRS}$ is determined by the first device based on a higher layer parameter, sidelink-physical sidelink shared channel-demodulation reference signal-time pattern list (*sl-PSSCH-DMRS-TimePatternList*). It should be understood that a value of $N_{RE}^{DMRS}$ may be 0. $N_{oh}^{PRB}$ represents the overheads indicated by the higher layer signaling. For example, $N_{oh}^{PRB}$ is determined by the first device based on a higher layer parameter related to SL-PRS transmission. For example, the higher layer parameter related to SL-PRS transmission is sidelink-sidelink positioning reference signal-X-overhead (*sl-SLPRS-X-Overhead*). It should be understood that a value of $N_{oh}^{PRB}$ may be 0.

It should be understood that for different time domain units, time domain subunits, or first frequency domain units, for the manner in which the first device determines the first resource quantity, refer to the foregoing examples.

In a possible implementation, the method 300 further includes: The first device sends first indication information. The first indication information is used to determine the quantity of time domain subunits related to the SL-PRS.

For example, if the quantity of time domain subunits related to the SL-PRS is less than the quantity of time domain subunits occupied by the SL-PRS, the first device may send the first indication information, so that a second device may determine the quantity of time domain subunits related to the SL-PRS based on the first indication information and the quantity of time domain subunits occupied by the SL-PRS.

It should be understood that the quantity of time domain subunits related to the SL-PRS is the quantity of time domain subunits occupied by the SL-PRS, or is the quantity of time domain subunits occupied by the SL-PRS plus k. The first device may also send the first indication information.

The following describes possible forms of the first indication information.

For example, the first indication information is 1 bit (bit). If a value of the first indication information is "0", it indicates that the quantity of time domain subunits related to the SL-PRS is 0; or if a value of the first indication information is "1", it indicates that the quantity of time domain subunits related to the SL-PRS is not 0.

For another example, the first indication information is M bits, and M is an integer greater than 1, for example, 2, 3, or 4. If the value of the first indication information is "00" (2 bits), "000" (3 bits), or "0000" (4 bits), it indicates that the quantity of time domain subunits related to the SL-PRS is 0; or if the first indication information is another non-zero value, the quantity of time domain subunits related to the SL-PRS is one of multiple possible values. Optionally, one of the multiple possible values is the quantity of time domain subunits occupied by the SL-PRS, and at least one of the multiple possible values is less than the quantity of time domain subunits occupied by the SL-PRS. For example, the first indication information is 2 bits. If the value of the first indication information is "01", it indicates that the quantity of time domain subunits related to the SL-PRS is the quantity of time domain subunits occupied by the SL-PRS; if the value of the first indication information is "10", it indicates that the quantity of time domain subunits related to the SL-PRS is 1/2 of the quantity of time domain subunits occupied by the SL-PRS; or if the value of the first indication information is "11", it indicates that the quantity of time domain subunits related to the SL-PRS is 1/4 of the quantity of time domain subunits occupied by the SL-PRS.

Optionally, the first indication information may also be referred to as SL-PRS overhead indication information, or the first indication information may also have another name. This is not limited in this embodiment of this application.

Optionally, the first device may send the first indication information through the 1st-stage SCI. For example, the first device may send the first indication information through the PSCCH in the second time domain unit. Alternatively, the first device may send the first indication information through the 2nd-stage SCI. For example, the first device may send the first indication information through the 2nd-stage SCI carried on the first PSSCH. Optionally, that the first device sends the first indication information through the 1st-stage SCI may be understood as that the first indication information is carried in the 1st-stage SCI. That the first device sends the first indication information through the 2nd-stage SCI may be understood as that the first indication information is carried in the 2nd-stage SCI. Optionally, when the first indication information has a plurality of bits, the first indication information may alternatively be indicated by both the 1st-stage SCI and the 2nd-stage SCI.

It may be understood that the first device sends the first indication information, so that the second device can determine the quantity of time domain subunits related to the SL-PRS based on the first indication information, to ensure that the TBS determined by the second device based on the quantity of time domain subunits related to the SL-PRS is the same as the TBS determined by the first device.

In a possible implementation, the method 300 further includes: The first device sends third indication information. When the third indication information is a first value, the first device determines the first resource quantity based on the first parameter. The first value may be a value greater than 0, or may be another value. This is not limited in this embodiment of this application.

It should be understood that when the third indication information is a second value, the first device does not use the first parameter when determining the first resource quantity. The second value is different from the first value.

For example, the third indication information is 1 bit. If a value of the third indication information is "0", the first device does not use the first parameter when determining the first resource quantity. If a value of the third indication information is "1", the first device determines the first resource quantity based on the first parameter.

It should be understood that, if the first device determines the first resource quantity based on the first parameter, the quantity of time domain subunits related to the SL-PRS is not 0. If the first device does not use the first parameter when determining the first resource quantity, the quantity of time domain subunits related to the SL-PRS is not 0.

It should be further understood that, if the quantity of time domain subunits related to the SL-PRS is not 0, it may be equivalent as that the time domain unit in which the first PSSCH is located includes the SL-PRS; and if the quantity of time domain subunits related to the SL-PRS is 0, it may be equivalent as that the time domain unit in which the first PSSCH is located includes no SL-PRS. Optionally, the third indication information may indicate whether the time domain unit in which the first PSSCH is located includes the SL-PRS. If the third indication information is the first value, it indicates that the third indication information indicates that the time domain unit in which the first PSSCH is located includes the SL-PRS. If the third indication information is the second value, it indicates that the third indication information indicates that the time domain unit in which the first PSSCH is located includes no SL-PRS.

It should be further understood that, based on the foregoing descriptions, when the time domain unit in which the first PSSCH is located includes no SL-PRS, the first device may determine the quantity of time domain subunits related to the SL-PRS based on the quantity of time domain subunits that are occupied by the SL-PRS and that are included in the first time domain unit, and the quantity that is of time domain subunits related to the SL-PRS and that is determined by the first device may not be 0. Therefore, the third indication information sent by the first device may not indicate whether the time domain unit in which the first PSSCH is located actually includes the SL-PRS. In other words, the first device sends the third indication information based on the quantity of time domain subunits related to the SL-PRS, rather than based on whether the time domain unit in which the first PSSCH is located actually includes the SL-PRS. If the quantity of time domain subunits related to the SL-PRS is 0, the third indication information sent by the first device is the first value; or if the quantity of time domain subunits related to the SL-PRS is not 0, the third indication information sent by the first device is the second value.

Optionally, the third indication information may be further used to determine the quantity of time domain subunits related to the SL-PRS. For example, the third indication information is L bits, and L is an integer greater than 1, for example, 2, 3, or 4. If the value of the third indication information is an all-zero value (for example, "0", "00", "000", or "0000"), the first device does not use the first parameter when determining the first resource quantity, and the third indication information is used to determine that the quantity of time domain subunits related to the SL-PRS is 0; or if the third indication information is a value greater than 0 or a non-zero value, the first device determines the first resource quantity based on the first parameter, and the third indication information is used to determine that the quantity of time domain subunits related to the SL-PRS is one of multiple possible values. Optionally, one of the multiple possible values is the quantity of time domain subunits occupied by the SL-PRS, and at least one of the multiple possible values is less than the quantity of time domain subunits occupied by the SL-PRS. For example, the third indication information is 2 bits. If the value of the third indication information is "01", the third indication information is used to determine that the quantity of time domain subunits related to the SL-PRS is the quantity of time domain subunits occupied by the SL-PRS; if the value of the third indication information is "10", the third indication information is used to determine that the quantity of time domain subunits related to the SL-PRS is 1/2 of the quantity of time domain subunits occupied by the SL-PRS; or if the value of the third indication information is "11", the third indication information is used to determine that the quantity of time domain subunits related to the SL-PRS is 1/4 of the quantity of time domain subunits occupied by the SL-PRS.

Optionally, the third indication information may also be referred to as indication information indicating whether the SL-PRS appears, or the third indication information may have another name. This is not limited in this embodiment of this application.

Optionally, for sending the third indication information by the first device, refer to a manner in which the first device sends the first indication information.

It may be understood that when the first device sends the third indication information, the second device can determine, based on the third indication information, that the first device determines the first resource quantity based on the first parameter, so that the second device can also determine the first resource quantity based on the first parameter, to ensure that the first device and the second device determine the same TBS.

S320: The first device determines the TBS of the first TB based on the first resource quantity.

For example, the first device determines a total quantity of resources of the first PSSCH based on a quantity of first frequency domain units included in the first PSSCH. Further, the first device may determine the TBS based on the total quantity of resources of the first PSSCH.

Assuming that the time domain unit is a slot, the time domain subunit is a symbol, and the first frequency domain unit is a PRB, the total quantity that is of resources of the first PSSCH and that is determined by the first device based on the quantity of first frequency domain units included in the first PSSCH satisfies the following condition:

$$N_{RE} = N_{RE}^i \cdot n_{PRB} - N_{RE}^{SCI,1} - N_{RE}^{SCI,2} \text{ Formula (6)}.$$

$N_{RE}$ represents the total quantity of resources of the first PSSCH, that is, represents a total quantity of REs of the first PSSCH in one slot.

$n_{PRB}$ represents the quantity of first frequency domain units included in the first PSSCH. $N_{RE}^{SCI,1}$ represents a quantity of REs occupied by a PSCCH and a PSCCH DMRS in the slot in which the first PSSCH is located. $N_{RE}^{SCI,2}$ represents a quantity of REs used for transmission of coded modulation symbols of the 2nd-stage SCI in the slot in which the first PSSCH is located. It should be understood that if the slot in which the first PSSCH is located is not used for transmission of the 2nd-stage SCI,

$$N_{RE}^{SCI,2} = 0.$$

It should be understood that for different time domain units, time domain subunits, or first frequency domain units, for a manner in which the first device determines the total quantity of resources of the first PSSCH, refer to the foregoing examples.

For example, after the first device determines the total quantity of resources of the first PSSCH, the first device determines the TBS based on a code rate, a modulation order, and a quantity of spatial streams that are used when the TB is transmitted on the PSSCH.

Optionally, for a manner in which the first device determines the TBS of the first TB based on the total quantity of resources of the first PSSCH, refer to a process of determining a TBS of a TB carried on a PDSCH or a PUSCH in an existing protocol or standard. Details are not described in this embodiment of this application.

S330: The first device sends the first TB.

Optionally, after the first device determines the TBS of the first TB, the first device generates to-be-sent information after performing corresponding channel coding, modulation, spatial stream mapping, and time-frequency resource mapping on the first TB. The first device may send the information through the first PSSCH.

Correspondingly, the second device may receive the first TB from the first device.

In a possible implementation, if the first device sends SCI through the first PSSCH, the method 300 further includes: The first device determines a quantity of coded modulation symbols of the SCI based on the quantity of time domain subunits related to the SL-PRS. The first device sends the SCI through the first PSSCH. For a manner in which the first device determines the quantity of coded modulation symbols of the SCI based on the quantity of time domain subunits related to the SL-PRS, refer to descriptions in the following method 700. Details are not described herein.

The following describes a procedure in which the second device demodulates the first TB.

Optionally, if the second device does not obtain the multiplexing manner of the SL-PRS and the second PSSCH in the first time domain unit before performing S340, the method 300 further includes: The second device obtains the multiplexing manner of the SL-PRS and the second PSSCH in the first time domain unit.

In a possible implementation, the multiplexing manner of the SL-PRS and the second PSSCH in the first time domain unit is configured through higher layer signaling.

In this implementation, the method 300 further includes: The network device sends indication information #3 to the second device through the higher layer signaling. Correspondingly, the second device receives the indication information #3 from the network device. The indication information #3 is used to determine that the multiplexing manner of the SL-PRS and the second PSSCH in the first time domain unit is TDM or FDM. For the indication information #3, refer to the foregoing descriptions of the indication information #1. For brevity, details are not described again in this embodiment of this application.

In a possible implementation, the multiplexing manner of the SL-PRS and the second PSSCH in the first time domain unit is preconfigured or predefined.

In a possible implementation, the multiplexing manner of the SL-PRS and the second PSSCH in the first time domain unit corresponds to the first time domain unit. For example, a correspondence between different time domain units and different multiplexing manners is preconfigured in the second device. In this case, the second device may determine, based on the correspondence, that the multiplexing manner corresponding to the first time domain unit is TDM, so that the second device determines that the multiplexing manner of the SL-PRS and the second PSSCH in the first time domain unit is TDM.

In a possible implementation, the multiplexing manner of the SL-PRS and the second PSSCH in the first time domain unit is indicated by the first device.

In this implementation, the method 300 further includes: The second device receives fourth indication information from the first device. The fourth indication information indicates the multiplexing manner of the SL-PRS and the second PSSCH in the first time domain unit. For more descriptions of the fourth indication information, refer to the foregoing descriptions. For brevity, details are not described again in this embodiment of this application.

In a possible implementation, the multiplexing manner of the SL-PRS and the second PSSCH in the first time domain unit is indicated by the third device.

In this implementation, the method 300 further includes: The third device sends indication information #4 to the first device. Correspondingly, the first device receives the indication information #4 from the third device. The indication information #4 is used to determine that the multiplexing manner of the SL-PRS and the second PSSCH in the first time domain unit is TDM or FDM. For more descriptions of the indication information #4, refer to the indication information #1.

It may be understood that after obtaining the multiplexing manner of the SL-PRS and the second PSSCH in the first time domain unit, the second device may select, based on the multiplexing manner, a proper method to determine the TBS of the first TB transmitted on the first PSSCH, to improve the accuracy of the determined TBS.

It should be understood that if the second device determines that the multiplexing manner of the SL-PRS and the second PSSCH in the first time domain unit is TDM, the second device continues to perform S340 and S350, to determine the TBS of the first TB transmitted on the first PSSCH.

S340: The second device determines the first resource quantity based on the first parameter.

Optionally, if the second device receives the third indication information from the first device, and the third indication information is the first value, the second device determines the first resource quantity based on the first parameter.

The following describes a manner in which the second device determines the first resource quantity based on the first parameter.

In a possible implementation, the second device determines the quantity of time domain subunits related to the SL-PRS based on the quantity of time domain subunits occupied by the SL-PRS. Further, the second device determines the first resource quantity based on the quantity of time domain subunits related to the SL-PRS.

In this implementation, the quantity that is of time domain subunits related to the SL-PRS and that is determined by the second device is one of the following: the quantity of time domain subunits occupied by the SL-PRS; or the quantity of time domain subunits occupied by the SL-PRS plus k; or 0.

For example, if the time domain unit in which the first PSSCH is located includes the SL-PRS, and there is no null symbol or AGC symbol before the SL-PRS, the second device determines that the quantity of time domain subunits related to the SL-PRS is the quantity of time domain subunits occupied by the SL-PRS.

For another example, if the time domain unit in which the first PSSCH is located includes the SL-PRS, and there is a null symbol or an AGC symbol before the SL-PRS, the second device determines that the quantity of time domain subunits related to the SL-PRS is the quantity of time domain subunits occupied by the SL-PRS plus k.

For another example, if the time domain unit in which the first PSSCH is located includes no SL-PRS, the second device determines that the quantity of time domain subunits related to the SL-PRS is 0.

The second device may determine, in a preconfigured or predefined manner, whether the time domain unit in which the first PSSCH is located includes the SL-PRS. Alternatively, when the second device receives the third indication information from the first device, the second device may determine, based on the third indication information, whether the time domain unit in which the first PSSCH is located includes the SL-PRS. For example, if the third indication information is the first value, the second device determines that the time domain unit in which the first PSSCH is located includes the SL-PRS; or if the third indication information is the second value, the second device determines that the time domain unit in which the first PSSCH is located includes no SL-PRS. It should be understood that the second device cannot determine, based on the third indication information, whether the time domain unit in which the first PSSCH is located actually includes the SL-PRS.

Optionally, if the third indication information received by the second device is further used to determine the quantity of time domain subunits related to the SL-PRS, the second device may determine the quantity of time domain subunits related to the SL-PRS based on the third indication information and the quantity of time domain subunits occupied by the SL-PRS. For example, the second device may determine, based on the third indication information and the quantity of time domain subunits occupied by the SL-PRS, that the quantity of time domain subunits related to the SL-PRS is 1/2 of the quantity of time domain subunits occupied by the SL-PRS.

In a possible implementation, the second device determines the quantity of time domain subunits related to the SL-PRS based on the first indication information and the quantity of time domain subunits occupied by the SL-PRS. Further, the second device determines the first resource quantity based on the quantity of time domain subunits related to the SL-PRS.

In this implementation, the quantity that is of time domain subunits related to the SL-PRS and that is determined by the second device is one of the following: the quantity of time domain subunits occupied by the SL-PRS; or the quantity of time domain subunits occupied by the SL-PRS plus k; or a quantity less than the quantity of time domain subunits occupied by the SL-PRS; or 0.

For example, if the value of the first indication information is "01", the second device determines that the quantity of time domain subunits related to the SL-PRS is the quantity of time domain subunits occupied by the SL-PRS. For another example, if the value of the first indication information is "10", the second device determines that the quantity of time domain subunits related to the SL-PRS is 1/2 of the quantity of time domain subunits occupied by the SL-PRS.

After determining the quantity of time domain subunits related to the SL-PRS, the second device may determine the first resource quantity based on the quantity of time domain subunits related to the SL-PRS. A manner in which the second device determines the first resource quantity is the same as a manner in which the first device determines the first resource quantity. For example, the second device may determine the first resource quantity according to Formula (1) and Formula (2), or determine the first resource quantity according to Formula (3) and Formula (4), or determine the first resource quantity according to Formula (3) and Formula (5).

It should be noted that, when the second device determines the first resource quantity according to Formula (4) or Formula (5), the second device may determine $N_{symb}^{PSFCH}$ based on the higher layer parameter *sl-PSFCH-Period,* or may determine $N_{symb}^{PSFCH}$ based on the higher layer parameter *sl-PSFCH-Period* and the *PSFCH overhead indication* field in the SCI format 1-A. For example, if the higher layer parameter *sl-PSFCH-Period* is 1, the second device may determine that $N_{symb}^{PSFCH}$ is equal to 3. For another example, if the higher layer parameter *sl-PSFCH-Period* is 2 or 4, and the *PSFCH overhead indication* field in the SCI format 1-A indicates "1", the second device may determine that $N_{symb}^{PSFCH}$ is equal to 3. If the higher layer parameter *sl-PSFCH-Period* is 2 or 4, and the *PSFCH overhead indication* field in the SCI format 1-A indicates "0", the second device may determine that $N_{symb}^{PSFCH}$ is equal to 0. For another example, if the higher layer parameter *sl-PSFCH-Period* is 0, the second device may determine that $N_{symb}^{PSFCH}$ is equal to 0.

S350: The second device determines the TBS of the first TB based on the first resource quantity.

For example, the second device determines the total quantity of resources of the first PSSCH based on the quantity of first frequency domain units included in the first PSSCH. Further, the second device may determine the TBS based on the total quantity of resources of the first PSSCH.

A manner in which the second device determines the total quantity of resources of the first PSSCH is the same as a manner in which the first device determines the total quantity of resources of the first PSSCH. For example, the second device may determine the total quantity of resources of the first PSSCH according to Formula (6).

Optionally, for a manner in which the second device determines the TBS based on the total quantity of resources of the first PSSCH, refer to a process of determining a TBS of a TB carried on a PDSCH or a PUSCH in an existing protocol or standard. Details are not described in this embodiment of this application.

S360: The second device demodulates the first TB based on the TBS.

It should be noted that, if the first PSSCH and the second PSSCH are different PSSCHs, the TBS of the first TB transmitted on the first PSSCH is the same as the TBS of the first TB transmitted on the second PSSCH. In this case, the second device can combine and receive the first TB transmitted on the first PSSCH and the first TB transmitted on the second PSSCH.

In this embodiment of this application, the first device can determine, based on the quantity of time domain subunits occupied by the SL-PRS, the quantity of resources of the first PSSCH within the first frequency domain unit, and determine, based on the quantity of resources of the first PSSCH within the first frequency domain unit, the TBS of the first TB transmitted on the first PSSCH, to improve the accuracy of the determined TBS and improve transmission performance. For example, if the first device does not consider, when determining the TBS of the first TB, the quantity of time domain subunits occupied by the SL-PRS, and the time domain unit in which the first PSSCH is located includes the SL-PRS, the first device may determine a larger TBS, affecting transmission performance of the first TB.

FIG. 6 is a schematic flowchart of a data transmission method 600 according to another embodiment of this application. As shown in FIG. 6, the method 600 may include the following steps.

Optionally, if a first device does not obtain a multiplexing manner of an SL-PRS and a second PSSCH in a first time domain unit before performing S610, the method 600 further includes: The first device obtains the multiplexing manner of the SL-PRS and the second PSSCH in the first time domain unit.

For more descriptions of the second PSSCH, refer to the foregoing method 300. For descriptions of obtaining, by the first device, the multiplexing manner of the SL-PRS and the second PSSCH in the first time domain unit, refer to the foregoing method 300.

Optionally, if the first device autonomously determines the multiplexing manner of the SL-PRS and the second PSSCH in the first time domain unit, the method 600 further includes: The first device sends fourth indication information. The fourth indication information indicates the multiplexing manner of the SL-PRS and the second PSSCH in the first time domain unit. For more descriptions of the fourth indication information, refer to the foregoing method 300.

It should be understood that if the first device determines that the multiplexing manner of the SL-PRS and the second PSSCH in the first time domain unit is FDM, the first device continues to perform S610 and S620, to determine a TBS of a first TB transmitted on a first PSSCH.

S610: The first device determines a first resource quantity based on a first parameter.

The first resource quantity is a quantity of resources of the first PSSCH within a first frequency domain unit.

For more descriptions of the first PSSCH, refer to S310 in the foregoing method 300. For brevity, details are not described herein again.

The first parameter includes a quantity of time domain subunits occupied by the SL-PRS and a frequency domain interval. The quantity of time domain subunits occupied by the SL-PRS and the frequency domain interval may be configured through higher layer signaling, or may be preconfigured, or may be predefined. This is not limited in this embodiment of this application.

It may be understood that the SL-PRS is located in the first time domain unit, and therefore, the quantity of time domain subunits occupied by the SL-PRS is a quantity of time domain subunits occupied by the SL-PRS in the first time domain unit, and the time domain subunit may be a symbol. The frequency domain interval of the SL-PRS refers to a quantity of frequency domain subunits between two adjacent frequency domain subunits occupied by the SL-PRS, and the frequency domain subunit may be a subcarrier.

For two scenarios to which this embodiment of this application may be applied, refer to the descriptions in S310 of the method 300.

The following describes a manner in which the first device determines the first resource quantity based on the quantity of time domain subunits occupied by the SL-PRS and the frequency domain interval.

For example, the first device determines a second resource quantity based on the quantity of time domain subunits occupied by the SL-PRS and the frequency domain interval. The second resource quantity is related to the SL-PRS. Further, the second device determines the first resource quantity based on the second resource quantity.

The second resource quantity may be understood as a quantity of resources that cannot be used for transmission of the first TB due to transmission of the SL-PRS, or may be understood as a quantity of resource "overheads" occupied by an equivalent SL-PRS.

In a possible implementation, the second resource quantity is a quantity of resources occupied by the SL-PRS within the first frequency domain unit in the first time domain unit.

For example, if a time domain unit in which each of all PSSCHs used for transmission of the first TB is located includes an SL-PRS, the second resource quantity is a quantity of resources occupied by the SL-PRS within the first frequency domain unit in the first time domain unit.

The second resource quantity is denoted as $N_{RE}^{SL-PRS}$, the quantity of time domain subunits occupied by the SL-PRS is denoted as $M_{SL-PRS}$, and the frequency domain interval of the SL-PRS is denoted as $N_{comb}$. In this case, $N_{RE}^{SL-PRS} = N \cdot M_{SL-PRS} / N_{comb}$. N is a quantity of frequency domain subunits included in the first frequency domain unit. For example, if the first frequency domain unit is a PRB, and the frequency domain subunit is a subcarrier, $N = N_{sc}^{RB}$.

Optionally, the second resource quantity may alternatively be represented as $N_{RE}^{SL-PRS} = floor(N \cdot M_{SL-PRS} / N_{comb})$ or $N_{RE}^{SL-PRS} = ceiling(N \cdot M_{SL-PRS} / N_{comb})$. floor(x) represents rounding down x, and ceiling (x) represents rounding up x.

In a possible implementation, the second resource quantity is less than a quantity of resources occupied by the SL-PRS within the first frequency domain unit in the first time domain unit.

For example, if a time domain unit in which a PSSCH #3 of all PSSCHs used for transmission of the first TB is located includes no SL-PRS, the second resource quantity is less than the quantity of resources occupied by the SL-PRS within the first frequency domain unit in the first time domain unit.

The second resource quantity is denoted as $N_{RE}^{SL-PRS}$, the quantity of time domain subunits occupied by the SL-PRS is denoted as $M_{SL-PRS}$, and the frequency domain interval of the SL-PRS is denoted as $N_{comb}$. In this case, $N_{RE}^{SL-PRS} = \omega N \cdot M_{SL-PRS} / N_{comb}$. $\omega$ is a real number greater than 0 and less than 1.

Optionally, the second resource quantity may alternatively be represented as

$$N_{RE}^{SL-PRS} = floor(\omega N \cdot M_{SL-PRS} / N_{comb}) \text{ or } N_{RE}^{SL-PRS} = ceiling(\omega N \cdot M_{SL-PRS} / N_{comb}).$$

In a possible implementation, the second resource quantity is 0.

For example, if a second time domain unit in which the first PSSCH is located includes no SL-PRS, the second resource quantity is 0.

For another example, if a time domain unit in which each of all PSSCHs used for transmission of the first TB is located includes no SL-PRS, the second resource quantity is 0.

The following describes a manner in which the first device determines the first resource quantity based on the second resource quantity.

Assuming that the time domain unit is a slot, the time domain subunit is a symbol, and the first frequency domain unit is a PRB, the first resource quantity satisfies the following condition:

$$N_{RE}^{'} = N_{SC}^{RB} \cdot N_{symb}^{sh} - N_{RE}^{SL-PRS} \text{ Formula (7).}$$

$N_{RE}^{'}$ represents the first resource quantity, that is, represents a quantity of REs of the first PSSCH within one PRB in one slot. $N_{sc}^{RB}$ represents a quantity of subcarriers within one PRB, for example, $N_{sc}^{RB} = 12$. $N_{symb}^{sh}$ is determined by the quantity of sidelink symbols in one slot. For $N_{symb}^{sh}$, refer to the descriptions in S310 of the foregoing method 300. $N_{RE}^{SL-PRS}$ represents the second resource quantity.

Optionally, the first parameter may further include at least one of the following: a quantity of time domain subunits related to a PSFCH, overheads indicated by a higher layer parameter, and a quantity of resources occupied by a DMRS.

It may be understood that when the first parameter further includes at least one of the foregoing parameters, and when the TBS of the first TB is determined, overheads that cannot be used for transmission of the first TB in the time domain unit in which the first PSSCH is located may be considered as much as possible, so that accuracy of the determined TBS can be improved.

For example, when the first parameter further includes the quantity of time domain subunits related to the PSFCH, assuming that the time domain unit is a slot, the time domain subunit is a symbol, and the first frequency domain unit is a PRB, the first resource quantity satisfies the following condition:

$$N_{RE}^{'} = N_{SC}^{RB}(N_{symb}^{sh} - N_{symb}^{PSFCH}) - N_{RE}^{SL-PRS} \text{ Formula (8).}$$

$N_{symb}^{PSFCH}$ represents the quantity of symbols related to the PSFCH. For $N_{symb}^{PSFCH}$, refer to the descriptions in S310 of the foregoing method 300.

For another example, when the first parameter further includes the overheads indicated by the higher layer parameter and the quantity of resources occupied by the DMRS, assuming that the time domain unit is a slot, the time domain subunit is a symbol, and the first frequency domain unit is a PRB, the first resource quantity satisfies the following condition:

$$N_{RE}^{'} = N_{SC}^{RB}(N_{symb}^{sh} - N_{symb}^{PSFCH}) - N_{RE}^{SL-PRS} - N_{oh}^{PRB} - N_{RE}^{DMRS} \text{ Formula (9).}$$

$N_{RE}^{DMRS}$ represents a quantity of REs occupied by the DMRS within one PRB. For $N_{RE}^{DMRS}$, refer to the descriptions in S310 of the foregoing method 300. $N_{oh}^{PRB}$ represents the overheads indicated by the higher layer signaling. For $N_{oh}^{PRB}$, refer to the descriptions in S310 of the foregoing method 300.

It should be understood that for different time domain units, time domain subunits, or first frequency domain units, for the manner in which the first device determines the first resource quantity, refer to the foregoing examples.

In a possible implementation, the method 600 further includes: The first device sends second indication information. The second indication information is used to determine the second resource quantity.

For example, if the second resource quantity is less than the quantity of resources occupied by the SL-PRS within the first frequency domain unit in the first time domain unit, the first device may send the second indication information, so that a second device may determine the second resource quantity based on the second indication information, the quantity of time domain subunits occupied by the SL-PRS, and the frequency domain interval.

It should be understood that if the second resource quantity is equal to the quantity of resources occupied by the SL-PRS within the first frequency domain unit in the first time domain unit, the first device may also send the second indication information.

The following describes possible forms of the second indication information.

For example, the second indication information is 1 bit. If a value of the second indication information is "0", it indicates that the second resource quantity is 0; or if a value of the second indication information is "1", it indicates that the second resource quantity is not 0.

For another example, the second indication information is K bits, and K is an integer greater than 1, for example, 2, 3, or 4. If the value of the second indication information is an all-zero value (for example, "0", "00", "000", or "0000"), it indicates that the second resource quantity is 0; or if the second indication information is a value greater than 0 or a non-zero value, the second resource quantity is one of multiple possible values. Optionally, one of the multiple possible values is the quantity of resources occupied by the SL-PRS within the first frequency domain unit in the first time domain unit, and at least one of the multiple possible values is less than the quantity of resources occupied by the SL-PRS within the first frequency domain unit in the first time domain unit. For example, the second indication information is 2 bits. If the value of the second indication information is "01", it indicates that the second resource quantity is the quantity of resources occupied by the SL-PRS within the first frequency domain unit in the first time domain unit; if the value of the second indication information is "10", it indicates that the second resource quantity is 1/2 of the quantity of resources occupied by the SL-PRS within the first frequency domain unit in the first time domain unit, or indicates that a value of $\omega$ is 1/2; or if the value of the second indication information is "11", it indicates that the second resource quantity is 1/4 of the quantity of resources occupied by the SL-PRS within the first frequency domain unit in the first time domain unit, or indicates that a value of $\omega$ is 1/4.

Optionally, the second indication information may also be referred to as SL-PRS overhead indication information, or the second indication information may also have another name. This is not limited in this embodiment of this application.

Optionally, for sending the second indication information by the first device, refer to a manner in which the first device sends the first indication information in the method 300.

It may be understood that the first device sends the second indication information, so that the second device can determine the second resource quantity based on the second indication information, to ensure that a TBS determined by the second device based on the second resource quantity is the same as the TBS determined by the first device.

In a possible implementation, the method 600 further includes: The first device sends third indication information. When the third indication information is a first value, the first device determines the first resource quantity based on the first parameter. The first value may be a value greater than 0, or may be another value. This is not limited in this embodiment of this application.

For the third indication information, refer to the descriptions in the foregoing method 300.

Optionally, the third indication information may be further used to determine the second resource quantity. For example, the third indication information is L bits, and L is an integer greater than 1, for example, 2, 3, or 4. If a value of the third indication information is an all-zero value (for example, "0", "00", "000", or "0000"), the first device does not use the first parameter when determining the first resource quantity, and the third indication information is used to determine that the second resource quantity is 0; or if the third indication information is a value greater than 0 or a non-zero value, the first device determines the first resource quantity based on the first parameter, and the third indication information is used to determine that the second resource quantity is one of multiple possible values. Optionally, one of the multiple possible values is the quantity of resources occupied by the SL-PRS within the first frequency domain unit in the first time domain unit, and at least one of the multiple possible values is less than the quantity of resources occupied by the SL-PRS within the first frequency domain unit in the first time domain unit. For example, the third indication information is 2 bits. If the value of the third indication information is "01", the third indication information is used to determine that the second resource quantity is the quantity of resources occupied by the SL-PRS within the first frequency domain unit in the first time domain unit; if the value of the third indication information is "10", the third indication information is used to determine that the second resource quantity is 1/2 of the quantity of resources occupied by the SL-PRS within the first frequency domain unit in the first time domain unit; or if the value of the third indication information is "11", the third indication information is used to determine that the second resource quantity is 1/4 of the quantity of resources occupied by the SL-PRS within the first frequency domain unit in the first time domain unit.

Optionally, the third indication information may also be referred to as indication information indicating whether the SL-PRS appears, or the third indication information may have another name. This is not limited in this embodiment of this application.

Optionally, for sending the third indication information by the first device, refer to a manner in which the first device sends the first indication information in the method 300.

It may be understood that when the first device sends the third indication information, the second device can determine, based on the third indication information, that the first device determines the first resource quantity based on the first parameter, so that the second device can also determine the first resource quantity based on the first parameter, to ensure that the first device and the second device determine the same TBS.

S620: The first device determines the TBS of the first TB based on the first resource quantity.

For S620, refer to S320 in the foregoing method 300.

S630: The first device sends the first TB.

For S630, refer to S330 in the foregoing method 300.

In a possible implementation, if the first device sends SCI through the first PSSCH, the method 600 further includes: The first device determines a quantity of coded modulation symbols of the SCI based on the quantity of time domain subunits occupied by the SL-PRS and the frequency domain interval. The first device sends the SCI through the first PSSCH. For a manner in which the first device determines the quantity of coded modulation symbols of the SCI based on the quantity of time domain subunits occupied by the SL-PRS and the frequency domain interval, refer to descriptions in the following method 800. Details are not described herein.

The following describes a procedure in which the second device demodulates the first TB.

Optionally, if the second device does not obtain the multiplexing manner of the SL-PRS and the second PSSCH in the first time domain unit before performing S640, the method 600 further includes: The second device obtains the multiplexing manner of the SL-PRS and the second PSSCH in the first time domain unit.

For descriptions of obtaining, by the second device, the multiplexing manner of the SL-PRS and the second PSSCH in the first time domain unit, refer to the foregoing method 300.

It should be understood that if the second device determines that the multiplexing manner of the SL-PRS and the second PSSCH in the first time domain unit is FDM, the second device continues to perform S640 and S650, to determine the TBS of the first TB transmitted on the first PSSCH.

S640: The second device determines the first resource quantity based on the first parameter.

Optionally, if the second device receives the third indication information from the first device, and the third indication information is the first value, the second device determines the first resource quantity based on the first parameter.

The following describes a manner in which the second device determines the first resource quantity based on the first parameter.

In a possible implementation, the second device determines the second resource quantity based on the quantity of time domain subunits occupied by the SL-PRS and the frequency domain interval. Further, the second device determines the first resource quantity based on the second resource quantity.

In this implementation, the second resource quantity $N_{RE}^{SL-PRS}$ determined by the second device is one of the following:

$$N_{RE}^{SL-PRS} = N \cdot M_{SL-PRS} / N_{comb} \quad ; \quad \text{or} \quad N_{RE}^{SL-PRS} = floor(N \cdot M_{SL-PRS} / N_{comb}) \quad ; \quad \text{or}$$

$$N_{RE}^{SL-PRS} = ceiling(N \cdot M_{SL-PRS} / N_{comb}) \text{ ; or 0.}$$

For example, if the time domain unit in which the first PSSCH is located includes the SL-PRS, the second resource quantity $N_{RE}^{SL-PRS}$ determined by the second device is $N_{RE}^{SL-PRS} = N \cdot M_{SL-PRS} / N_{comb}$ .

For another example, if the time domain unit in which the first PSSCH is located includes no SL-PRS, the second device determines that the second resource quantity is 0.

For a manner in which the second device determines whether the time domain unit in which the first PSSCH is located includes the SL-PRS, refer to S340 in the foregoing method 300.

Optionally, if the third indication information received by the second device is further used to determine the second resource quantity, the second device may determine the second resource quantity based on the third indication information, the quantity of time domain subunits occupied by the SL-PRS, and the frequency domain interval. For example, the second device may determine, based on the third indication information, the quantity of time domain subunits occupied by the SL-PRS, and the frequency domain interval, that the second resource quantity is 1/2 of the quantity of resources occupied by the SL-PRS within the first frequency domain unit in the first time domain unit.

In a possible implementation, the second device determines the second resource quantity based on the second indication information, the quantity of time domain subunits occupied by the SL-PRS, and the frequency domain interval. Further, the second device determines the first resource quantity based on the second resource quantity.

In this implementation, the second resource quantity $N_{RE}^{SL-PRS}$ determined by the second device is one of the following:

$$N_{RE}^{SL-PRS} = N \cdot M_{SL-PRS} / N_{comb} \quad ; \quad \text{or} \quad N_{RE}^{SL-PRS} = floor(N \cdot M_{SL-PRS} / N_{comb}) \quad ; \quad \text{or}$$

$$N_{RE}^{SL-PRS} = ceiling(N \cdot M_{SL-PRS} / N_{comb}) \quad ; \quad \text{or} \quad N_{RE}^{SL-PRS} = \omega \, N \cdot M_{SL-PRS} / N_{comb} \quad ; \quad \text{or}$$

$$N_{RE}^{SL-PRS} = floor(\omega \, N \cdot M_{SL-PRS} / N_{comb}) \quad ; \text{ or } \quad N_{RE}^{SL-PRS} = ceiling(\omega \, N \cdot M_{SL-PRS} / N_{comb}) \quad ; \text{ or } 0.$$

For example, if the value of the second indication information is "01", the second device determines the second resource quantity $N_{RE}^{SL-PRS}$: $N_{RE}^{SL-PRS} = N \cdot M_{SL-PRS} / N_{comb}$. For another example, if the value of the second indication information is "10", the second resource quantity $N_{RE}^{SL-PRS}$ determined by the second device is

$$N_{RE}^{SL-PRS} = \omega \, N \cdot M_{SL-PRS} / N_{comb}, \text{ where } \omega \text{ is 1/2.}$$

After determining the second resource quantity, the second device may determine the first resource quantity based on the second resource quantity. A manner in which the second device determines the first resource quantity is the same as a manner in which the first device determines the first resource quantity. For example, the second device may determine the first resource quantity according to Formula (7), Formula (8), or Formula (9).

It should be noted that, when the second device determines the first resource quantity according to Formula (8) or Formula (9), the second device may determine $N_{symb}^{PSFCH}$ based on a higher layer parameter *sl-PSFCH-Period,* or may determine $N_{symb}^{PSFCH}$ based on the higher layer parameter *sl-PSFCH-Period* and a *PSFCH overhead indication* field in an SCI format 1-A. For a manner in which the second device determines $N_{symb}^{PSFCH}$, refer to the descriptions in S340 of the method 300.

S650: The second device determines the TBS of the first TB based on the first resource quantity.

For S650, refer to S350 in the foregoing method 300.

S660: The second device demodulates the first TB based on the TBS.

It should be noted that, if the first PSSCH and the second PSSCH are different PSSCHs, the TBS of the first TB transmitted on the first PSSCH is the same as the TBS of the first TB transmitted on the second PSSCH. In this case, the second device can combine and receive the first TB transmitted on the first PSSCH and the first TB transmitted on the second PSSCH.

In this embodiment of this application, the first device can determine, based on the quantity of time domain subunits occupied by the SL-PRS and the frequency domain interval, the quantity of resources of the first PSSCH within the first frequency domain unit, and determine, based on the quantity of resources of the first PSSCH within the first frequency domain unit, the TBS of the first TB transmitted on the first PSSCH, to improve the accuracy of the determined TBS and improve transmission performance. For example, if the first device does not consider, when determining the TBS of the first TB, the quantity of time domain subunits occupied by the SL-PRS, and the time domain unit in which the first PSSCH is located includes the SL-PRS, the first device may determine a larger TBS, affecting transmission performance of the first TB.

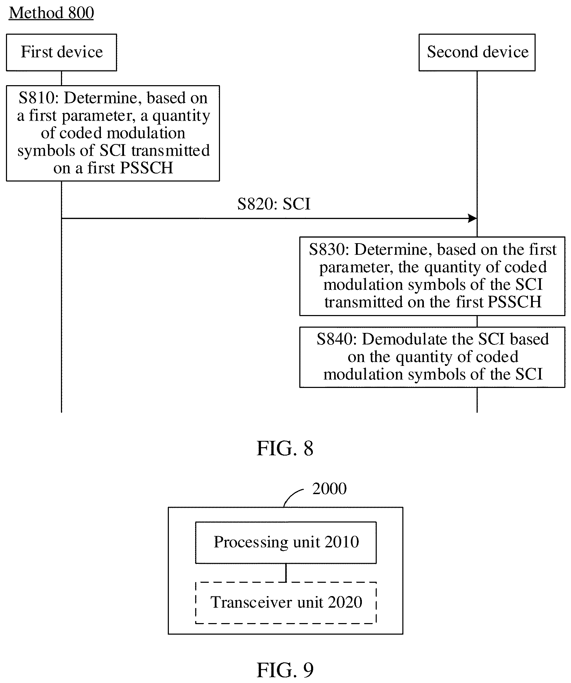

With reference to FIG. 7 and FIG. 8, the following describes a manner of determining, based on a quantity of time domain subunits occupied by an SL-PRS, a quantity of coded modulation symbols of SCI transmitted on a first PSSCH.

FIG. 7 is a schematic flowchart of a data transmission method 700 according to an embodiment of this application. As shown in FIG. 7, the method 700 may include the following steps.

Optionally, if a first device does not obtain a multiplexing manner of an SL-PRS and a second PSSCH in a first time domain unit before performing S710, the method 700 further includes: The first device obtains the multiplexing manner of the SL-PRS and the second PSSCH in the first time domain unit.

The second PSSCH is used for transmission of SCI. For example, the second PSSCH is used for initial transmission of the SCI, or the second PSSCH is used for retransmission of the SCI. This is not limited in this embodiment of this application.

For descriptions of obtaining, by the first device, the multiplexing manner of the SL-PRS and the second PSSCH in the first time domain unit, refer to the foregoing method 300.

Optionally, if the first device autonomously determines the multiplexing manner of the SL-PRS and the second PSSCH in the first time domain unit, the method 700 further includes: The first device sends fourth indication information. The fourth indication information indicates the multiplexing manner of the SL-PRS and the second PSSCH in the first time domain unit. For more descriptions of the fourth indication information, refer to the foregoing method 300.

It should be understood that if the first device determines that the multiplexing manner of the SL-PRS and the second PSSCH in the first time domain unit is TDM, the first device continues to perform S710, to determine a quantity of coded modulation symbols of SCI transmitted on a first PSSCH.

S710: The first device determines, based on a first parameter, the quantity of coded modulation symbols of the SCI transmitted on the first PSSCH.

Optionally, in this application, the SCI may be 1st-stage SCI, or may be 2nd-stage SCI.

The first PSSCH is used for transmission of the SCI. For example, the first PSSCH is used for retransmission of the SCI, or the first PSSCH is used for initial transmission of the SCI.

The first PSSCH and the second PSSCH are a same PSSCH, or the first PSSCH and the second PSSCH are different PSSCHs. If the first PSSCH and the second PSSCH are different PSSCHs, the first PSSCH is used for initial transmission of the SCI, and the second PSSCH is used for retransmission of the SCI. In other words, a second time domain unit in which the first PSSCH is located is before the first time domain unit. It should be noted that, when the first PSSCH and the second PSSCH are different PSSCHs, the quantity of coded modulation symbols of the SCI transmitted on the first PSSCH is the same as a quantity of coded modulation symbols of the SCI transmitted on the second PSSCH.

The first parameter includes a quantity of time domain subunits occupied by the SL-PRS. For more descriptions of the quantity of time domain subunits occupied by the SL-PRS, refer to S310 in the foregoing method 300.

For example, that the first device determines, based on the first parameter, the quantity of coded modulation symbols of the SCI transmitted on the first PSSCH includes: The first device determines a quantity of time domain subunits related to the SL-PRS based on the quantity of time domain subunits occupied by the SL-PRS. Further, the first device determines, based on the quantity of time domain subunits related to the SL-PRS, the quantity of coded modulation symbols of the SCI transmitted on the first PSSCH.

For two scenarios to which this embodiment of this application may be applied, refer to the descriptions in S310 of the method 300.

For a manner in which the first device determines the quantity of time domain subunits related to the SL-PRS based on the quantity of time domain subunits occupied by the SL-PRS, refer to S310 in the foregoing method 300.

The following describes a manner in which the first device determines, based on the quantity of time domain subunits related to the SL-PRS, the quantity of coded modulation symbols of the SCI transmitted on the first PSSCH.

Assuming that the time domain unit is a slot, and the time domain subunit is a symbol, a quantity of symbols of the first PSSCH in one slot (the slot is an example of the second time domain unit) may satisfy Formula (1) in the foregoing method 300.

Optionally, the first parameter may further include at least one of the following: a quantity of time domain subunits related to a PSFCH, overheads indicated by a higher layer parameter, and a quantity of resources occupied by a DMRS.

It may be understood that when the first parameter further includes at least one of the foregoing parameters, and when a TBS of a first TB is determined, overheads that cannot be used for transmission of the first TB in the time domain unit in which the first PSSCH is located may be considered as much as possible, so that accuracy of the determined TBS can be improved.

For example, when the first parameter further includes the quantity of time domain subunits related to the PSFCH, assuming that the time domain unit is a slot, and the time domain subunit is a symbol, the quantity of symbols of the first PSSCH in one slot (the slot is an example of the second time domain unit) may satisfy Formula (3) in the foregoing method 300.

Further, the first device may determine the quantity of coded modulation symbols of the SCI based on the quantity of symbols of the first PSSCH in one slot. For example, the quantity of coded modulation symbols of the SCI satisfies the following condition:

$$Q'_{SCI2} = \min\left\{ \left\lceil \frac{(Q_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma \quad \text{Formula (10)}.$$

$Q'_{SCI2}$ represents the quantity of coded modulation symbols of the SCI.

$Q_{SCI2}$ represents a quantity of bits of the SCI. $Q_m^{SCI2}$ represents a modulation order. Optionally, $Q_m^{SCI2}$ is indicated by the 1st-stage SCI, is a modulation order of the 2nd-stage SCI, is a modulation order for transmission of information on the first PSSCH, or is a modulation order for transmission of the SCI on the first PSSCH. Optionally, when a modulation scheme is quadrature phase shift keying (quadrature phase shift keying, QPSK), the modulation order is 2. Optionally, when the modulation scheme is 16 quadrature amplitude modulation (quadrature amplitude modulation, QAM), the modulation order is 4. Optionally, when the modulation scheme is 64QAM, the modulation order is 6. Optionally, when the modulation scheme is 256QAM, the modulation order is 8.

$L_{SCI2}$ represents a quantity of cyclic redundancy check (cyclic redundancy check, CRC) bits of the SCI. $\beta_{offset}^{SCI2}$ is a parameter indicated by the 1st-stage SCI. $M_{sc}^{SCI2}(l)$ represents a quantity of subcarriers that are used to send the SCI at a symbol $l$ and that are of the first PSSCH.

R represents a bit rate. Optionally, R is a code rate indicated by the 1st-stage SCI, a code rate of the 2nd-stage SCI, a code rate for transmission of information on the first PSSCH, or a code rate for transmission of the SCI on the first PSSCH.

$\gamma$ is a quantity of unoccupied REs in a resource block RB in which a last coded symbol of the SCI is located.

$\alpha$ is a scaling factor configured through higher layer signaling. $N_{symbol}^{PSSCH}$ represents a quantity of symbols of the first PSSCH in one slot, and $N_{symbol}^{PSSCH}$ satisfies Formula (1) or Formula (3) in the foregoing method 300.

Min(A,B) represents that a smaller value in A and B is used, and ⌈ ⌉ represents rounding up.

It should be understood that for different time domain units, time domain subunits, or first frequency domain units, for the manner in which the first device determines the quantity of coded modulation symbols of the SCI, refer to the foregoing example.

In a possible implementation, the method 700 further includes: The first device sends first indication information. The first indication information is used to determine the quantity of time domain subunits related to the SL-PRS. For more descriptions of the first indication information, refer to S310 in the foregoing method 300.

It may be understood that the first device sends the first indication information, so that a second device can determine the quantity of time domain subunits related to the SL-PRS based on the first indication information, to ensure that a quantity that is of coded modulation symbols of the SCI and that is determined by the second device based on the quantity of time domain subunits related to the SL-PRS is the same as the quantity that is of coded modulation symbols of the SCI and that is determined by the first device.

In a possible implementation, the method 700 further includes: The first device sends third indication information. When the third indication information is a first value, the first device determines, based on the first parameter, the quantity of coded modulation symbols of the SCI transmitted on the first PSSCH. The first value may be a value greater than 0, or may be another value. This is not limited in this embodiment of this application. For more descriptions of the third indication information, refer to S310 in the foregoing method 300.

It may be understood that when the first device sends the third indication information, the second device can determine, based on the third indication information, that the first device determines the quantity of coded modulation symbols of the SCI based on the first parameter, so that the second device can also determine the quantity of coded modulation symbols of the SCI based on the first parameter, to ensure that the first device and the second device determine the same quantity of coded modulation symbols of the SCI.

S720: The first device sends the SCI.

The first device sends the SCI on the first PSSCH. Correspondingly, the second device receives the SCI on the first PSSCH.

The following describes a procedure in which the second device demodulates the SCI.

Optionally, if the second device does not obtain the multiplexing manner of the SL-PRS and the second PSSCH in the first time domain unit before performing S730, the method 700 further includes: The second device obtains the multiplexing manner of the SL-PRS and the second PSSCH in the first time domain unit.

For descriptions of obtaining, by the second device, the multiplexing manner of the SL-PRS and the second PSSCH in the first time domain unit, refer to the foregoing method 300.

It should be understood that if the second device determines that the multiplexing manner of the SL-PRS and the second PSSCH in the first time domain unit is TDM, the second device continues to perform S730, to determine the quantity of coded modulation symbols of the SCI transmitted on the first PSSCH.

S730: The second device determines, based on the first parameter, the quantity of coded modulation symbols of the SCI transmitted on the first PSSCH.

Optionally, if the second device receives the third indication information from the first device, and the third indication information is the first value, the second device determines, based on the first parameter, the quantity of coded modulation symbols of the SCI transmitted on the first PSSCH.

The following describe a manner in which the second device determines, based on the first parameter, the quantity of coded modulation symbols of the SCI transmitted on the first PSSCH.

In a possible implementation, the second device determines the quantity of time domain subunits related to the SL-PRS based on the quantity of time domain subunits occupied by the SL-PRS. Further, the first device determines, based on the quantity of time domain subunits related to the SL-PRS, the quantity of coded modulation symbols of the SCI transmitted on the first PSSCH.

For a manner in which the second device determines the quantity of time domain subunits related to the SL-PRS based on the quantity of time domain subunits occupied by the SL-PRS, refer to S340 in the foregoing method 300.

In a possible implementation, the second device determines the quantity of time domain subunits related to the SL-PRS based on the first indication information and the quantity of time domain subunits occupied by the SL-PRS. Further, the first device determines, based on the quantity of time domain subunits related to the SL-PRS, the quantity of coded modulation symbols of the SCI transmitted on the first PSSCH.

For a manner in which the second device determines the quantity of time domain subunits related to the SL-PRS based on the first indication information and the quantity of time domain subunits occupied by the SL-PRS, refer to S340 in the foregoing method 300.

After determining the quantity of time domain subunits related to the SL-PRS, the second device may determine, based on the quantity of time domain subunits related to the SL-PRS, the quantity of coded modulation symbols of the SCI transmitted on the first PSSCH. A manner in which the second device determines the quantity of coded modulation symbols of the SCI transmitted on the first PSSCH is the same as a manner in which the first device determines the quantity of coded modulation symbols of the SCI transmitted on the first PSSCH. For example, the second device may determine the quantity of coded modulation symbols of the SCI transmitted on the first PSSCH according to Formula (1) and Formula (10), or determine the quantity of coded modulation symbols of the SCI transmitted on the first PSSCH according to Formula (3) and Formula (10).

S740: The second device demodulates the SCI based on the quantity of coded modulation symbols of the SCI.

It should be noted that, if the first PSSCH and the second PSSCH are different PSSCHs, the quantity of coded modulation symbols of the SCI transmitted on the first PSSCH is the same as the quantity of coded modulation symbols of the SCI transmitted on the second PSSCH. In this case, the second device can combine and receive the SCI transmitted on the first PSSCH and the SCI transmitted on the second PSSCH.

In this embodiment of this application, the first device can determine, based on the quantity of time domain subunits occupied by the SL-PRS, the quantity of coded modulation symbols of the SCI transmitted on the first PSSCH, so that accuracy of the determined quantity of coded modulation symbols of the SCI can be improved, and transmission performance can be improved. For example, if the first device does not consider, when determining the quantity of coded modulation symbols of the SCI, the quantity of time domain subunits occupied by the SL-PRS, and the time domain unit in which the first PSSCH is located includes the SL-PRS, the first device may determine a larger quantity of coded modulation symbols of the SCI, affecting transmission performance of the SCI.

FIG. 8 is a schematic flowchart of a data transmission method 800 according to an embodiment of this application. As shown in FIG. 8, the method 800 may include the following steps.

Optionally, if a first device does not obtain a multiplexing manner of an SL-PRS and a second PSSCH in a first time domain unit before performing S810, the method 800 further includes: The first device obtains the multiplexing manner of the SL-PRS and the second PSSCH in the first time domain unit.

The second PSSCH is used for transmission of SCI. For example, the second PSSCH is used for initial transmission of the SCI, or the second PSSCH is used for retransmission of the SCI. This is not limited in this embodiment of this application.

For descriptions of obtaining, by the first device, the multiplexing manner of the SL-PRS and the second PSSCH in the first time domain unit, refer to the foregoing method 300.

Optionally, if the first device autonomously determines the multiplexing manner of the SL-PRS and the second PSSCH in the first time domain unit, the method 800 further includes: The first device sends fourth indication information. The fourth indication information indicates the multiplexing manner of the SL-PRS and the second PSSCH in the first time domain unit. For more descriptions of the fourth indication information, refer to the foregoing method 300.

It should be understood that if the first device determines that the multiplexing manner of the SL-PRS and the second PSSCH in the first time domain unit is FDM, the first device continues to perform S810, to determine a quantity of coded modulation symbols of SCI transmitted on a first PSSCH.

S810: The first device determines, based on a first parameter, the quantity of coded modulation symbols of the SCI transmitted on the first PSSCH.

Optionally, in this application, the SCI may be 1st-stage SCI, or may be 2nd-stage SCI.

For more descriptions of the first PSSCH, refer to S710 in the foregoing method 700. For brevity, details are not described herein again.

The first parameter includes a quantity of time domain subunits occupied by the SL-PRS and a frequency domain interval. For more descriptions of the quantity of time domain subunits occupied by the SL-PRS and the frequency domain interval, refer to S610 in the foregoing method 600.

For example, that the first device determines, based on the first parameter, the quantity of coded modulation symbols of the SCI transmitted on the first PSSCH includes: The first device determines a quantity of time domain subunits related to the SL-PRS based on the quantity of time domain subunits occupied by the SL-PRS and the frequency domain interval. Further, the first device determines, based on the quantity of time domain subunits related to the SL-PRS, the quantity of coded modulation symbols of the SCI transmitted on the first PSSCH.

For two scenarios to which this embodiment of this application may be applied, refer to the descriptions in S310 of the method 300.

The following describes a manner in which the first device determines the quantity of time domain subunits related to the SL-PRS.

The quantity that is of time domain subunits related to the SL-PRS and that is determined by the first device based on the quantity of time domain subunits occupied by the SL-PRS and the frequency domain interval is one of the following.

For example, if a time domain unit in which each of all PSSCHs used for transmission of the SCI is located includes an SL-PRS, $N_{symb}^{SL-PRS} = M_{SL-PRS} / N_{comb}$ . $M_{SL-PRS}$ represents the quantity of time domain subunits occupied by the SL-PRS, and $N_{comb}$ represents the frequency domain interval.

Optionally, $N_{symb}^{SL-PRS} = floor(M_{SL-PRS} / N_{comb})$ or $N_{symb}^{SL-PRS} = ceiling(M_{SL-PRS} / N_{comb})$ . *floor(x)* represents rounding down x, and *ceiling (x)* represents rounding up x.

For another example, if a time domain unit in which a PSSCH #3 in all PSSCHs used for transmission of the SCI is located includes no SL-PRS, $N_{symb}^{SL-PRS} = \omega \cdot M_{SL-PRS} / N_{comb}$ . $\omega$ is a real number greater than 0 and less than 1.

Optionally, $N_{symb}^{SL-PRS} = floor(\omega \cdot M_{SL-PRS} / N_{comb})$ or $N_{symb}^{SL-PRS} = ceiling(\omega \cdot M_{SL-PRS} / N_{comb})$ .

For another example, if a time domain unit in which each of all PSSCHs used for transmission of the SCI is located includes no SL-PRS, $N_{symb}^{SL-PRS} = 0$ .

After determining the quantity of time domain subunits related to the SL-PRS, the first device may determine, based on the quantity of time domain subunits related to the SL-PRS, the quantity of coded modulation symbols of the SCI transmitted on the first PSSCH. For a manner in which the first device determines, based on the quantity of time domain subunits related to the SL-PRS, the quantity of coded modulation symbols of the SCI transmitted on the first PSSCH, refer to S710 in the foregoing method 700.

In a possible implementation, the method 800 further includes: The first device sends fifth indication information. The fifth indication information is used to determine the quantity of time domain subunits related to the SL-PRS.

For example, the fifth indication information is 1 bit. If a value of the fifth indication information is "0", it indicates that the quantity of time domain subunits related to the SL-PRS is 0; or if a value of the fifth indication information is "1", it indicates that the quantity of time domain subunits related to the SL-PRS is not 0, for example, $N_{symb}^{SL-PRS} = M_{SL-PRS} / N_{comb}$ .

For another example, the fifth indication information is K bits, and K is an integer greater than 1, for example, 2, 3, or 4. If the value of the fifth indication information is an all-zero value (for example, "0", "00", "000", or "0000"), it indicates that the quantity of time domain subunits related to the SL-PRS is 0; or if the fifth indication information is a value greater than 0 or another non-zero value, the quantity of time domain subunits related to the SL-PRS is one of multiple possible values. For example, if the fifth indication information is 2 bits, and the value of the fifth indication information is "01", it indicates $N_{symb}^{SL-PRS} = M_{SL-PRS} / N_{comb}$ ; if the value of the fifth indication information is "10", it indicates $N_{symb}^{SL-PRS} = \frac{1}{2} M_{SL-PRS} / N_{comb}$ or indicates that a value of $\omega$ is 1/2; or if the value of the fifth indication information is "11", it indicates $N_{symb}^{SL-PRS} = \frac{1}{4} M_{SL-PRS} / N_{comb}$ or indicates that a value of $\omega$ is 1/4.

Optionally, the fifth indication information may also be referred to as SL-PRS overhead indication information, or the fifth indication information may also have another name. This is not limited in this embodiment of this application.

Optionally, for sending the fifth indication information by the first device, refer to a manner in which the first device sends the first indication information in the method 300.

It may be understood that the first device sends the fifth indication information, so that a second device can determine the quantity of time domain subunits related to the SL-PRS based on the fifth indication information, to ensure that a quantity that is of coded modulation symbols of the SCI and that is determined by the second device based on the quantity of time domain subunits related to the SL-PRS is the same as the quantity that is of coded modulation symbols of the SCI and that is determined by the first device.

In a possible implementation, the method 800 further includes: The first device sends third indication information.

When the third indication information is a first value, the first device determines, based on the first parameter, the quantity of coded modulation symbols of the SCI transmitted on the first PSSCH. The first value may be a value greater than 0, or may be another value. This is not limited in this embodiment of this application.

For the third indication information, refer to S310 in the foregoing method 300.

Optionally, the third indication information may be further used to determine the quantity of time domain subunits related to the SL-PRS. For example, the third indication information is L bits, and L is an integer greater than 1, for example, 2, 3, or 4. If a value of the third indication information is an all-zero value (for example, "0", "00", "000", or "0000"), the first device does not use the first parameter when determining the quantity of coded modulation symbols of the SCI, and the third indication information is used to determine that the quantity of time domain subunits related to the SL-PRS is 0; or if a value of the third indication information is greater than 0 or another non-zero value, the first device determines the quantity of coded modulation symbols of the SCI based on the first parameter, and the third indication information is used to determine that the quantity of time domain subunits related to the SL-PRS is one of multiple possible values.

For example, the third indication information is 2 bits. If the value of the third indication information is "01", the third indication information is used to determine $N_{symb}^{SL-PRS} = M_{SL-PRS} / N_{comb}$ ; if the value of the third indication information is "10", the third indication information is used to determine $N_{symb}^{SL-PRS} = \frac{1}{2} M_{SL-PRS} / N_{comb}$ ; or if the value of the third indication information is "11", the third indication information is used to determine $N_{symb}^{SL-PRS} = \frac{1}{4} M_{SL-PRS} / N_{comb}$ .

Optionally, the third indication information may also be referred to as indication information indicating whether the SL-PRS appears, or the third indication information may have another name. This is not limited in this embodiment of this application.

Optionally, for sending the third indication information by the first device, refer to a manner in which the first device sends the first indication information in the method 300.

It may be understood that when the first device sends the third indication information, the second device can determine, based on the third indication information, that the first device determines the quantity of coded modulation symbols of the SCI based on the first parameter, so that the second device can also determine the quantity of coded modulation symbols of the SCI based on the first parameter, to ensure that the first device and the second device determine the same quantity of coded modulation symbols of the SCI.

S820: The first device sends the SCI.

The first device sends the SCI on the first PSSCH. Correspondingly, the second device receives the SCI on the first PSSCH.

The following describes a procedure in which the second device demodulates the SCI.

Optionally, if the second device does not obtain the multiplexing manner of the SL-PRS and the second PSSCH in the first time domain unit before performing S830, the method 800 further includes: The second device obtains the multiplexing manner of the SL-PRS and the second PSSCH in the first time domain unit.

For descriptions of obtaining, by the second device, the multiplexing manner of the SL-PRS and the second PSSCH in the first time domain unit, refer to the foregoing method 300.

It should be understood that if the second device determines that the multiplexing manner of the SL-PRS and the second PSSCH in the first time domain unit is FDM, the second device continues to perform S830, to determine the quantity of coded modulation symbols of the SCI transmitted on the first PSSCH.

S830: The second device determines, based on the first parameter, the quantity of coded modulation symbols of the SCI transmitted on the first PSSCH.

Optionally, if the second device receives the third indication information from the first device, and the third indication information is the first value, the second device determines, based on the first parameter, the quantity of coded modulation symbols of the SCI transmitted on the first PSSCH.

The following describe a manner in which the second device determines, based on the first parameter, the quantity of coded modulation symbols of the SCI transmitted on the first PSSCH.

In a possible implementation, the second device determines the quantity of time domain subunits related to the SL-PRS based on the quantity of time domain subunits occupied by the SL-PRS and the frequency domain interval. Further, the first device determines, based on the quantity of time domain subunits related to the SL-PRS, the quantity of coded modulation symbols of the SCI transmitted on the first PSSCH.

In this implementation, the quantity $N_{symb}^{SL-PRS}$ that is of time domain subunits related to the SL-PRS and that is determined by the second device is one of the following: $N_{symb}^{SL-PRS} = M_{SL-PRS} / N_{comb}$ ; or

$$N_{symb}^{SL-PRS} = floor(M_{SL-PRS} / N_{comb}) \text{ ; or } N_{symb}^{SL-PRS} = ceiling(M_{SL-PRS} / N_{comb}) \text{ ; or } N_{symb}^{SL-PRS} = 0 .$$

For example, if the time domain unit in which the first PSSCH is located includes the SL-PRS, the second device determines $N_{symb}^{SL-PRS}$ : $N_{symb}^{SL-PRS} = M_{SL-PRS} / N_{comb}$ .

For another example, if the time domain unit in which the first PSSCH is located includes no SL-PRS, the second device determines $N_{symb}^{SL-PRS} = 0$ .

For a manner in which the second device determines whether the time domain unit in which the first PSSCH is located includes the SL-PRS, refer to S340 in the foregoing method 300.

Optionally, if the third indication information received by the second device is further used to determine the quantity of time domain subunits related to the SL-PRS, the second device may determine the quantity of time domain subunits related to the SL-PRS based on the third indication information, the quantity of time domain subunits occupied by the SL-PRS, and the frequency domain interval. For example, the second device may determine $N_{symb}^{SL-PRS} = \frac{1}{2} M_{SL-PRS} / N_{comb}$ based on the third indication information, the quantity of time domain subunits occupied by the SL-PRS, and the frequency domain interval.

In a possible implementation, the second device determines the quantity of time domain subunits related to the SL-PRS based on the fifth indication information and the quantity of time domain subunits occupied by the SL-PRS. Further, the first device determines, based on the quantity of time domain subunits related to the SL-PRS, the quantity of coded modulation symbols of the SCI transmitted on the first PSSCH.

In this implementation, the quantity $N_{symb}^{SL-PRS}$ that is of time domain subunits related to the SL-PRS and that is determined by the second device is one of the following: $N_{symb}^{SL-PRS} = M_{SL-PRS} / N_{comb}$ ; or

$$N_{symb}^{SL-PRS} = floor(M_{SL-PRS} / N_{comb}) \text{ ; or } N_{symb}^{SL-PRS} = ceiling(M_{SL-PRS} / N_{comb}) \text{ ; or }$$

$$N_{symb}^{SL-PRS} = \omega \cdot M_{SL-PRS} / N_{comb} \text{ ; or } N_{symb}^{SL-PRS} = floor(\omega \cdot M_{SL-PRS} / N_{comb}) \text{ ; or }$$

$$N_{symb}^{SL-PRS} = ceiling(\omega \cdot M_{SL-PRS} / N_{comb}) \text{ ; or } N_{symb}^{SL-PRS} = 0 .$$

For example, if the value of the fifth indication information is "01", the second device determines $N_{symb}^{SL-PRS}$ : $N_{symb}^{SL-PRS} = M_{SL-PRS} / N_{comb}$ . For another example, if the value of the fifth indication information is "10", $N_{symb}^{SL-PRS}$ determined by the second device is $N_{symb}^{SL-PRS} = \omega \cdot M_{SL-PRS} / N_{comb}$ , where $\omega$ is 1/2.

After determining the quantity of time domain subunits related to the SL-PRS, the second device may determine, based on the quantity of time domain subunits related to the SL-PRS, the quantity of coded modulation symbols of the SCI transmitted on the first PSSCH. A manner in which the second device determines the quantity of coded modulation symbols of the SCI transmitted on the first PSSCH is the same as a manner in which the first device determines the quantity of coded modulation symbols of the SCI transmitted on the first PSSCH. For example, the second device may determine the quantity of coded modulation symbols of the SCI transmitted on the first PSSCH according to Formula (1) and Formula (10), or determine the quantity of coded modulation symbols of the SCI transmitted on the first PSSCH according to Formula (3) and Formula (10).

S840: The second device demodulates the SCI based on the quantity of coded modulation symbols of the SCI.

It should be noted that, if the first PSSCH and the second PSSCH are different PSSCHs, the quantity of coded modulation symbols of the SCI transmitted on the first PSSCH is the same as the quantity of coded modulation symbols of the SCI transmitted on the second PSSCH. In this case, the second device can combine and receive the SCI transmitted on the first PSSCH and the SCI transmitted on the second PSSCH.

In this embodiment of this application, the first device can determine, based on the quantity of time domain subunits occupied by the SL-PRS and the frequency domain interval, the quantity of coded modulation symbols of the SCI transmitted on the first PSSCH, so that accuracy of the determined quantity of coded modulation symbols of the SCI can be improved, and transmission performance can be improved. For example, if the first device does not consider, when determining the quantity of coded modulation symbols of the SCI, the quantity of time domain subunits occupied by the SL-PRS, and the time domain unit in which the first PSSCH is located includes the SL-PRS, the first device may determine a larger quantity of coded modulation symbols of the SCI, affecting transmission performance of the SCI.

It may be understood that some optional features in embodiments of this application may be independent of other features in some scenarios, or may be combined with other features in some scenarios. This is not limited.

It may be further understood that, the solutions in embodiments of this application may be properly combined for use, and explanations or descriptions of terms in embodiments may be mutually referenced or explained in embodiments. This is not limited.

It may be further understood that in the foregoing method embodiments, methods and operations implemented by a communication device may alternatively be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 9 is a schematic block diagram of a communication apparatus 2000 according to an embodiment of this application. The apparatus 2000 includes a processing unit 2010. The processing unit 2010 may be configured to perform data processing.

Optionally, the apparatus 2000 further includes a transceiver unit 2020. The transceiver unit 2020 may be configured to implement a corresponding communication function. The transceiver unit 2020 may also be referred to as a communication interface or a communication unit.

Optionally, the apparatus 2000 further includes a storage unit. The storage unit may be configured to store instructions and/or data. The processing unit 2010 may read the instructions and/or the data in the storage unit, to enable the apparatus to implement actions of a device (for example, the first device and/or the second device) in the foregoing method embodiments.

In a design, the apparatus 2000 may be the first device in the foregoing embodiments, or may be a component (for example, a chip) of the first device. The apparatus 2000 may implement steps or procedures performed by the first device in the foregoing method embodiments. The processing unit 2010 may be configured to perform processing-related operations of the first device in the foregoing method embodiments. The transceiver unit 2020 may be configured to perform receiving/sending-related operations of the first device in the foregoing method embodiments.

In a possible implementation, the processing unit 2010 is configured to determine a first resource quantity based on a first parameter. The first resource quantity is a quantity of resources of a first physical shared channel within a first frequency domain unit. The first parameter includes a quantity of time domain subunits occupied by a PRS. The PRS and a second physical shared channel are located in a first time domain unit. The second physical shared channel is used for transmission of a first TB. The processing unit 2010 is further configured to determine a TBS of the first TB based on the first resource quantity. The transceiver unit 2020 is configured to send the first TB through the first physical shared channel.

In another possible implementation, the processing unit 2010 is configured to determine, based on a first parameter, a quantity of coded modulation symbols of control information transmitted on a first physical shared channel. The first parameter includes a quantity of time domain subunits occupied by a PRS. The PRS and a second physical shared channel are located in a first time domain unit. The second physical shared channel is used for transmission of the control information. The transceiver unit 2020 is configured to send the control information on the first physical shared channel.

In a design, the apparatus 2000 may be the second device in the foregoing embodiments, or may be a component (for example, a chip) of the second device. The apparatus 2000 may implement steps or procedures performed by the second device in the foregoing method embodiments. The processing unit 2010 may be configured to perform processing-related operations of the second device in the foregoing method embodiments. The transceiver unit 2020 may be configured to perform receiving/sending-related operations of the second device in the foregoing method embodiments.

In a possible implementation, the transceiver unit 2020 is configured to receive a first TB from a first device through a first physical shared channel. The processing unit 2010 is configured to determine a first resource quantity based on a first parameter. The first resource quantity is a quantity of resources of the first physical shared channel within a first frequency domain unit. The first parameter includes a quantity of time domain subunits occupied by a PRS. The PRS and a second physical shared channel are located in a first time domain unit. The second physical shared channel is used for transmission of the first TB. The processing unit 2010 is further configured to determine a TBS of the first TB based on the first resource quantity. The processing unit 2010 is further configured to demodulate the first TB based on the TBS.

In another possible implementation, the transceiver unit 2020 is configured to receive control information from a first device through a first physical shared channel. The processing unit 2010 is configured to determine, based on a first parameter, a quantity of coded modulation symbols of the control information transmitted on the first physical shared channel. The first parameter includes a quantity of time domain subunits occupied by a PRS. The PRS and a second physical shared channel are located in a first time domain unit. The second physical shared channel is used for transmission of the control information. The processing unit 2010 is further configured to demodulate the control information based on the quantity of coded modulation symbols of the control information.

The apparatus 2000 may implement steps or procedures performed by a device (for example, the first device and/or the second device) in the method embodiments according to embodiments of this application. The apparatus 2000 may include a unit configured to perform the method performed by the device in the embodiment shown in FIG. 3, FIG. 6, FIG. 7, or FIG. 8.

For more detailed descriptions of the apparatus 2000, refer to the related descriptions in the foregoing method embodiments. Details are not described herein again.

It should be understood that a specific process in which each unit performs the foregoing corresponding step has been described in detail in the foregoing method embodiments. For brevity, details are not described herein.

It should be further understood that the apparatus 2000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 may be specifically the device (for example, the first device and/or the second device) in the foregoing embodiments, and may be configured to perform procedures and/or steps corresponding to the device in the foregoing method embodiments. To avoid repetition, details are not described herein again.

The apparatus 2000 in the foregoing solutions has a function of implementing corresponding steps performed by the device (for example, the first device and/or the second device) in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving/sending operations and a related processing operation in the method embodiments.

In addition, the transceiver unit 2020 may alternatively be a transceiver circuit (for example, the transceiver circuit may include a receiver circuit and a transmitter circuit), and the processing unit 2010 may be a processing circuit.

It should be noted that the apparatus in FIG. 9 may be the device (for example, the first device and/or the second device) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

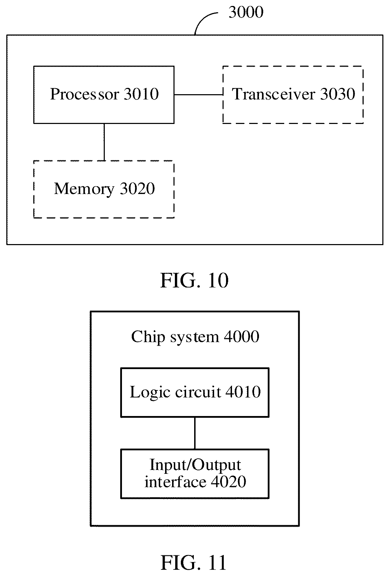

FIG. 10 is a schematic block diagram of a communication apparatus 3000 according to an embodiment of this application. The apparatus 3000 includes a processor 3010. The processor 3010 is coupled to a memory 3020. Optionally, the apparatus 3000 further includes the memory 3020, configured to store a computer program or instructions and/or data. The processor 3010 is configured to: execute the computer program or the instructions stored in the memory 3020, or read the data stored in the memory 3020, to perform the method in the foregoing method embodiments.

Optionally, there are one or more processors 3010.

Optionally, there are one or more memories 3020.

Optionally, the memory 3020 and the processor 3010 are integrated together, or disposed separately.

Optionally, as shown in FIG. 10, the apparatus 3000 further includes a transceiver 3030. The transceiver 3030 is configured to receive and/or send a signal. For example, the processor 3010 is configured to control the transceiver 3030 to receive and/or send a signal.

In a solution, the apparatus 3000 is configured to implement an operation performed by a device (for example, the first device and/or the second device) in the foregoing method embodiments.

For example, the processor 3010 is configured to execute the computer program or the instructions stored in the memory 3020, to implement related operations of the device in the foregoing method embodiments.

In an implementation process, steps in the foregoing methods can be implemented by using a hardware integrated logic circuit in the processor 3010, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 3020, and the processor 3010 reads information in the memory 3020 and completes the steps in the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 3010) may include one or more processors, and may be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other appropriate hardware, firmware, and/or a combination of hardware and software, and is configured to perform various functions described in this disclosure. The processor may be a general-purpose processor or a dedicated processor. For example, the processor 3010 may be a baseband processor or a central processing unit. The baseband processor may be configured to process a communication protocol and communication data. The central processing unit may be configured to: enable the apparatus to execute a software program, and process data in the software program. A part of the processor may further include a non-volatile random access memory. For example, the processor may further store information about a device type.

The program in this application represents software in a broad sense. A non-limitative example of the software includes program code, a program, a subprogram, instructions, an instruction set, code, a code segment, a software module, an application program, a software application program, or the like. The program may be run in the processor and/or a computer, to enable the apparatus to perform various functions and/or processes described in this application.

The memory (for example, the memory 3020) may store data needed by the processor (for example, the processor 3010) during software execution. The memory may be implemented by using any appropriate storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc storage, a magnetic disk storage medium, a magnetic storage device, a flash memory, a register, a status memory, a remote mounted storage, a local or remote storage component, or any other medium capable of carrying or storing software, data, or information and accessible by the processor/computer. It should be noted that the memory described in this specification aims to include but is not limited to these memories and any memory of another appropriate type.

The memory (for example, the memory 3020) and the processor (for example, the processor 3010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in a device or another network node).

FIG. 11 is a schematic block diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement the method and function in embodiments of this application. The input/output interface 4020 may be an input/output circuit in the chip system 4000, and output information processed by the chip system 4000, or input to-be-processed data or signaling information into the chip system 4000 for processing.

In a solution, the chip system 4000 is configured to implement an operation performed by a device (for example, the first device and/or the second device) in the foregoing method embodiments.

For example, the logic circuit 4010 is configured to implement a processing-related operation performed by the device in the foregoing method embodiments, for example, a processing-related operation performed by the device in the embodiment shown in FIG. 3, FIG. 6, FIG. 7, or FIG. 8. The input/output interface 4020 is configured to implement sending and/or receiving-related operations performed by the device in the foregoing method embodiments, for example, sending and/or receiving-related operations performed by the device in the embodiment shown in FIG. 3, FIG. 6, FIG. 7, or FIG. 8.

An embodiment of this application further provides a computer-readable storage medium. The computer-readable storage medium stores computer instructions used to implement the method performed by a device (for example, the first device and/or the second device) in the foregoing method embodiments.

An embodiment of this application further provides a computer program product, including instructions. When the instructions are executed by a computer, the method performed by a device (for example, the first device and/or the second device) in the foregoing method embodiment is implemented.

An embodiment of this application further provides a communication system. The communication system includes the first device and/or the second device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, the division into units is merely logical function division and may be other division during actual implementation. For example, multiple units or components may be combined or integrated into another system, or some features may be ignored or not performed. In addition, the displayed or discussed mutual couplings or direct couplings or communication connections may be indirect couplings or communication connections through some interfaces, apparatuses, or units, and may be in electrical, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, applied to a first device, wherein the method comprises:

   determining a first resource quantity based on a first parameter, wherein the first resource quantity is a quantity of resources of a first physical shared channel within a first frequency domain unit, the first parameter comprises a quantity of time domain subunits occupied by a positioning reference signal PRS, the PRS and a second physical shared channel are located in a first time domain unit, and the second physical shared channel is used for transmission of a first transport block TB;
   determining a size TBS of the first TB based on the first resource quantity; and
   sending the first TB through the first physical shared channel.

2. The method according to claim 1, wherein the first physical shared channel and the second physical shared channel are a same channel; or
   the first physical shared channel is used for initial transmission of the first TB, and the second physical shared channel is used for retransmission of the first TB.

3. The method according to claim 1 or 2, wherein in the first time domain unit, the PRS and the second physical shared channel are time division multiplexed, and determining the first resource quantity based on the first parameter comprises:

> determining a quantity of time domain subunits related to the PRS based on the quantity of time domain subunits occupied by the PRS; and
> determining the first resource quantity based on the quantity of time domain subunits related to the PRS, wherein the quantity of time domain subunits related to the PRS is any one of the following:
>
> > $M_{\text{SL-PRS}}$; or
> > $M_{\text{SL-PRS}}+k$, wherein k is a positive integer; or
> > $M^{1}_{\text{SL-PRS}}$, wherein $M^{1}_{\text{SL-PRS}} < M_{\text{SL-PRS}}$, wherein
> >
> > $M_{\text{SL-PRS}}$ represents the quantity of time domain subunits occupied by the PRS.

4. The method according to claim 3, wherein the first parameter further comprises at least one of the following: a quantity of time domain subunits related to a physical feedback channel, overheads indicated by a higher layer parameter, and a quantity of resources occupied by a demodulation reference signal DMRS.

5. The method according to claim 4, wherein the first time domain unit is a slot, the time domain subunit is a symbol, the first physical shared channel is a physical sidelink shared channel PSSCH, and a quantity of symbols of the first physical shared channel in one slot is:

($N^{sh}_{symb} - N^{PSFCH}_{symb} - N^{SL-PRS}_{symb}$), wherein $N^{sh}_{symb}$ is determined by a quantity of sidelink symbols in one slot, $N^{PSFCH}_{symb}$ represents the quantity of symbols related to the physical feedback channel, and $N^{SL-PRS}_{symb}$ represents the quantity of time domain subunits related to the PRS.

6. The method according to claim 4 or 5, wherein the first time domain unit is a slot, the time domain subunit is a symbol, the first frequency domain unit is a physical resource block PRB, and the first physical shared channel is a PSSCH; and

the first resource quantity satisfies a condition:

$$N^{'}_{RE} = N^{RB}_{SC}(N^{sh}_{symb} - N^{PSFCH}_{symb} - N^{SL-PRS}_{symb}) - N^{PRB}_{oh} - N^{DMRS}_{RE}$$, wherein

$N^{'}_{RE}$ represents the first resource quantity, $N^{RB}_{sc}$ represents a quantity of subcarriers within one PRB, $N^{sh}_{symb}$ is determined by the quantity of sidelink symbols in one slot, $N^{PSFCH}_{symb}$ represents the quantity of symbols related to the physical feedback channel, $N^{SL-PRS}_{symb}$ represents the quantity of time domain subunits related to the PRS, $N^{DMRS}_{RE}$ represents a quantity of resource elements REs occupied by the DMRS within one PRB, and $N^{PRB}_{oh}$ represents overheads indicated by higher layer signaling.

7. The method according to any one of claims 3 to 6, wherein the method further comprises:
sending first indication information, wherein the first indication information is used to determine the quantity of time domain subunits related to the PRS.

8. The method according to any one of claims 3 to 7, wherein the method further comprises:

> determining, based on the quantity of time domain subunits related to the PRS, a quantity of coded modulation symbols of control information transmitted on the first physical shared channel; and
> sending the control information on the first physical shared channel based on the quantity of coded modulation symbols of the control information.

9. The method according to claim 1 or 2, wherein in the first time domain unit, the PRS and the second physical shared channel are frequency division multiplexed, the first parameter further comprises a frequency domain interval of the PRS, and determining the first resource quantity based on the first parameter comprises:

> determining a second resource quantity based on the quantity of time domain subunits occupied by the PRS and the frequency domain interval, wherein the second resource quantity is related to the PRS; and determining the first resource quantity based on the second resource quantity, wherein the second resource quantity is any one of the following:

$$N \cdot M_{SL-PRS} / N_{comb};$$

or

$$\omega \cdot N \cdot M_{SL-PRS} / N_{comb};$$

or

$$floor(N \cdot M_{SL-PRS} / N_{comb});$$

or

$$floor(\omega \cdot N \cdot M_{SL-PRS} / N_{comb});$$

or

$$ceiling(N \cdot M_{SL-PRS} / N_{comb});$$

or

$$ceiling(\omega \cdot N \cdot M_{SL-PRS} / N_{comb}),$$

wherein
N represents a quantity of frequency domain subunits within the first frequency domain unit, $M_{SL-PRS}$ represents the quantity of time domain subunits occupied by the PRS, $N_{comb}$ represents the frequency domain interval, $\omega$ is a real number greater than 0 and less than 1, *floor(x)* represents rounding down x, and *ceiling (x)* represents rounding up x.

10. The method according to claim 9, wherein the first parameter further comprises at least one of the following: a quantity of time domain subunits related to a physical feedback channel, overheads indicated by a higher layer parameter, and a quantity of resources occupied by a DMRS.

11. The method according to claim 10, wherein the first time domain unit is a slot, the time domain subunit is a symbol, the first frequency domain unit is a PRB, and the first physical shared channel is a PSSCH; and

the first resource quantity satisfies a condition:

$$N_{RE}^{'} = N_{SC}^{RB}(N_{symb}^{sh} - N_{symb}^{PSFCH}) - N_{RE}^{SL-PRS} - N_{oh}^{PRB} - N_{RE}^{DMRS}$$ , wherein

$N_{RE}^{'}$ represents the first resource quantity, $N_{sc}^{RB}$ represents a quantity of subcarriers within one PRB, $N_{symb}^{sh}$ is determined by a quantity of sidelink symbols in one slot, $N_{symb}^{PSFCH}$ represents the quantity of symbols related to the physical feedback channel, $N_{RE}^{SL-PRS}$ represents the second resource quantity, $N_{RE}^{DMRS}$ represents a quantity of REs occupied by the DMRS within one PRB, and $N_{oh}^{PRB}$ represents overheads indicated by higher layer signaling,

12. The method according to any one of claims 9 to 11, wherein the method further comprises:
sending second indication information, wherein the second indication information is used to determine the second resource quantity.

**13.** The method according to any one of claims 9 to 12, wherein the method further comprises:

determining a quantity of time domain subunits related to the PRS based on the quantity of time domain subunits occupied by the PRS and the frequency domain interval;
determining, based on the quantity of time domain subunits related to the PRS, a quantity of coded modulation symbols of control information transmitted on the first physical shared channel; and
sending the control information on the first physical shared channel based on the quantity of coded modulation symbols of the control information, wherein
the quantity of time domain subunits related to the PRS is any one of the following:

$$M_{SL-PRS} / N_{comb} \, ;$$

or

$$\omega \cdot M_{SL-PRS} / N_{comb} \, ;$$

or

$$floor(M_{SL-PRS} / N_{comb}) \, ;$$

or

$$floor(\omega \cdot M_{SL-PRS} / N_{comb}) \, ;$$

or

$$ceiling(M_{SL-PRS} / N_{comb}) \, ;$$

or

$$ceiling(\omega \cdot M_{SL-PRS} / N_{comb}) \, ,$$

wherein
$M_{SL-PRS}$ represents the quantity of time domain subunits occupied by the PRS, $N_{comb}$ represents the frequency domain interval, $\omega$ is a real number greater than 0 and less than 1, *floor(x)* represents rounding down x, and *ceiling (x)* represents rounding up x.

**14.** The method according to claim 8 or 13, wherein the first time domain unit is a slot, the time domain subunit is a symbol, the first physical shared channel is a PSSCH, and the quantity of coded modulation symbols of the control information transmitted on the first physical shared channel satisfies the following condition:

$$Q'_{SCI2} = \min\left\{ \left\lceil \frac{(Q_{SCI2} + L_{SCI2}) \cdot \beta^{SCI2}_{offset}}{Q^{SCI2}_m \cdot R} \right\rceil, \left\lceil \alpha \sum_{l=0}^{N^{PSSCH}_{symbol}-1} M^{SCI2}_{sc}(l) \right\rceil \right\} + \gamma ,$$

wherein
$Q'_{SCI2}$ represents the quantity of coded modulation symbols of the control information, $Q_{SCI2}$ represents a quantity of bits of the control information, $L_{SCI2}$ represents a quantity of cyclic redundancy check bits of the control information, $\beta^{SCI2}_{offset}$ is a parameter indicated by 1st-stage sidelink control information SCI, $M^{SCI2}_{sc}(l)$ represents a quantity of subcarriers that are used to send the control information at a symbol *l* and that are of the first physical shared channel, R represents a code rate, $\gamma$ is a quantity of unoccupied REs in a resource block RB in which a last coded symbol of the control information is located, $Q^{SCI2}_m$ represents a modulation order, $\alpha$ is a scaling factor configured through higher layer signaling, $N_{symbol}^{PSSCH}$ represents a quantity of symbols of the first physical shared channel in one slot,

$N_{symbol}^{PSSCH} = N_{symb}^{sh} - N_{symb}^{PSFCH} - N_{symb}^{SL-PRS}$ , $N_{symb}^{sh}$ is determined by the quantity of sidelink symbols in one slot,

$N_{symb}^{PSFCH}$ represents the quantity of symbols related to the physical feedback channel, and $N_{symb}^{SL-PRS}$ represents the quantity of time domain subunits related to the PRS.

15. The method according to any one of claims 1 to 14, wherein the method further comprises:

sending third indication information; and
determining the first resource quantity based on the first parameter comprises:
when the third indication information is a first value, determining the first resource quantity based on the first parameter.

16. The method according to any one of claims 1 to 15, wherein the method further comprises:
sending fourth indication information, wherein the fourth indication information indicates a multiplexing manner of the PRS and the second physical shared channel in the first time domain unit, and the multiplexing manner is time division multiplexing or frequency division multiplexing.

17. The method according to any one of claims 1 to 16, wherein the method further comprises:

determining the multiplexing manner of the PRS and the second physical shared channel in the first time domain unit, wherein the multiplexing manner is time division multiplexing or frequency division multiplexing; and
the multiplexing manner is configured through higher layer signaling, or is preconfigured, or is predefined, or corresponds to the first time domain unit.

18. A data transmission method, applied to a second device, wherein the method comprises:

receiving a first transport block TB from a first device through a first physical shared channel;
determining a first resource quantity based on a first parameter, wherein the first resource quantity is a quantity of resources of the first physical shared channel within a first frequency domain unit, the first parameter comprises a quantity of time domain subunits occupied by a positioning reference signal PRS, the PRS and a second physical shared channel are located in a first time domain unit, and the second physical shared channel is used for transmission of the first TB;
determining a size TBS of the first TB based on the first resource quantity; and
demodulating the first TB based on the TBS.

19. The method according to claim 18, wherein the first physical shared channel and the second physical shared channel are a same channel; or
the first physical shared channel is used for initial transmission of the first TB, and the second physical shared channel is used for retransmission of the first TB.

20. The method according to claim 18 or 19, wherein in the first time domain unit, the PRS and the second physical shared channel are time division multiplexed, and determining the first resource quantity based on the first parameter comprises:

determining a quantity of time domain subunits related to the PRS based on the quantity of time domain subunits occupied by the PRS; and
determining the first resource quantity based on the quantity of time domain subunits related to the PRS, wherein the quantity of time domain subunits related to the PRS is any one of the following:

$$M_{SL-PRS};$$

or
$M_{SL-PRS}+k$, wherein k is a positive integer; or

$$M_{\text{SL-PRS}}^{1}, \text{ wherein } M_{\text{SL-PRS}}^{1} < M_{\text{SL-PRS}},$$

wherein
$M_{\text{SL-PRS}}$ represents the quantity of time domain subunits occupied by the PRS.

21. The method according to claim 18 or 19, wherein in the first time domain unit, the PRS and the second physical shared channel are time division multiplexed, and the method further comprises:

receiving first indication information from the first device, wherein the first indication information is used to determine a quantity of time domain subunits related to the PRS; and
determining the first resource quantity based on the first parameter comprises:

determining the quantity of time domain subunits related to the PRS based on the quantity of time domain subunits occupied by the PRS and the first indication information; and
determining the first resource quantity based on the quantity of time domain subunits related to the PRS, wherein
the quantity of time domain subunits related to the PRS is any one of the following:

$$M_{\text{SL-PRS}};$$

or
$M_{\text{SL-PRS}}+k$, wherein k is a positive integer; or

$M_{\text{SL-PRS}}^{1}$ , wherein $M_{\text{SL-PRS}}^{1} < M_{\text{SL-PRS}}$ , wherein
$M_{\text{SL-PRS}}$ represents the quantity of time domain subunits occupied by the PRS.

22. The method according to claim 20 or 21, wherein the first parameter further comprises at least one of the following: a quantity of time domain subunits related to a physical feedback channel, overheads indicated by a higher layer parameter, and a quantity of resources occupied by a demodulation reference signal DMRS.

23. The method according to claim 22, wherein the first time domain unit is a slot, the time domain subunit is a symbol, the first physical shared channel is a physical sidelink shared channel PSSCH, and a quantity of symbols of the first physical shared channel in one slot is:

( $N_{symb}^{sh} - N_{symb}^{PSFCH} - N_{symb}^{SL-PRS}$ ), wherein $N_{symb}^{sh}$ is determined by a quantity of sidelink symbols in one slot,

$N_{symb}^{PSFCH}$ represents the quantity of symbols related to the physical feedback channel, and $N_{symb}^{SL-PRS}$ represents the quantity of time domain subunits related to the PRS.

24. The method according to claim 22 or 23, wherein the first time domain unit is a slot, the time domain subunit is a symbol, the first frequency domain unit is a physical resource block PRB, and the first physical shared channel is a PSSCH; and

the first resource quantity satisfies a condition:

$$N_{RE}^{'} = N_{SC}^{RB}(N_{symb}^{sh} - N_{symb}^{PSFCH} - N_{symb}^{SL-PRS}) - N_{oh}^{PRB} - N_{RE}^{DMRS}$$ , wherein

$N_{RE}^{'}$ represents the first resource quantity, $N_{sc}^{RB}$ represents a quantity of subcarriers within one PRB, $N_{symb}^{sh}$ is determined by the quantity of sidelink symbols in one slot, $N_{symb}^{PSFCH}$ represents the quantity of symbols related to the physical feedback channel, $N_{symb}^{SL-PRS}$ represents the quantity of time domain subunits related to the PRS, $N_{RE}^{DMRS}$ represents a quantity of resource elements REs occupied by the DMRS within one PRB, and $N_{oh}^{PRB}$ represents overheads indicated by higher layer signaling.

25. The method according to any one of claims 20 to 24, wherein the method further comprises:

receiving control information from the first device through the first physical shared channel;

determining a quantity of coded modulation symbols of the control information based on the quantity of time domain subunits related to the PRS; and

demodulating the control information based on the quantity of coded modulation symbols of the control information.

26. The method according to claim 18 or 19, wherein in the first time domain unit, the PRS and the second physical shared channel are frequency division multiplexed, the first parameter further comprises a frequency domain interval of the PRS, and determining the first resource quantity based on the first parameter comprises:

determining a second resource quantity based on the quantity of time domain subunits occupied by the PRS and the frequency domain interval, wherein the second resource quantity is related to the PRS; and
determining the first resource quantity based on the second resource quantity, wherein
the second resource quantity is any one of the following:

$$N \cdot M_{SL-PRS} / N_{comb};$$

or

$$\omega \cdot N \cdot M_{SL-PRS} / N_{comb};$$

or

$$floor(N \cdot M_{SL-PRS} / N_{comb});$$

or

$$floor(\omega \cdot N \cdot M_{SL-PRS} / N_{comb});$$

or

$$ceiling(N \cdot M_{SL-PRS} / N_{comb});$$

or

$$ceiling(\omega \cdot N \cdot M_{SL-PRS} / N_{comb}),$$

wherein

N represents a quantity of frequency domain units within one PRB, $M_{SL-PRS}$ represents the quantity of time domain subunits occupied by the PRS, $N_{comb}$ represents the frequency domain interval, $\omega$ is a real number greater than 0 and less than 1, *floor(x)* represents rounding down x, and *ceiling (x)* represents rounding up x.

27. The method according to claim 18 or 19, wherein in the first time domain unit, the PRS and the second physical shared channel are frequency division multiplexed, the first parameter further comprises a frequency domain interval of the PRS, and the method further comprises:

receiving second indication information from the first device, wherein the second indication information is used to determine a second resource quantity, and the second resource quantity is related to the PRS; and
determining the first resource quantity based on the first parameter comprises:

determining the second resource quantity based on the quantity of time domain subunits occupied by the PRS, the frequency domain interval, and the second indication information; and
determining the first resource quantity based on the second resource quantity, wherein
the second resource quantity is any one of the following:

$$N \cdot M_{SL-PRS} / N_{comb};$$

or

$$\omega \cdot N \cdot M_{SL-PRS} / N_{comb};$$

or

$$floor(N \cdot M_{SL-PRS} / N_{comb});$$

or

$$floor(\omega \cdot N \cdot M_{SL-PRS} / N_{comb});$$

or

$$ceiling(N \cdot M_{SL-PRS} / N_{comb});$$

or

$$ceiling(\omega \cdot N \cdot M_{SL-PRS} / N_{comb}),$$

wherein
N represents a quantity of frequency domain subunits within the first frequency domain unit, $M_{SL-PRS}$ represents the quantity of time domain subunits occupied by the PRS, $N_{comb}$ represents the frequency domain interval, $\omega$ is a real number greater than 0 and less than 1, *floor(x)* represents rounding down x, and *ceiling (x)* represents rounding up x.

28. The method according to claim 26 or 27, wherein the first parameter further comprises at least one of the following: a quantity of time domain subunits related to a physical feedback channel, overheads indicated by a higher layer parameter, and a quantity of resources occupied by a DMRS.

29. The method according to claim 28, wherein the first time domain unit is a slot, the time domain subunit is a symbol, the first frequency domain unit is a PRB, and the first physical shared channel is a PSSCH; and

the first resource quantity satisfies a condition:
$$N_{RE}^{'} = N_{SC}^{RB}(N_{symb}^{sh} - N_{symb}^{PSFCH}) - N_{RE}^{SL-PRS} - N_{oh}^{PRB} - N_{RE}^{DMRS}, \text{ wherein}$$

$N_{RE}^{'}$ represents the first resource quantity, $N_{sc}^{RB}$ represents a quantity of subcarriers within one PRB, $N_{symb}^{sh}$ is determined by a quantity of sidelink symbols in one slot, $N_{symb}^{PSFCH}$ represents a quantity of symbols related to the physical feedback channel, $N_{RE}^{SL-PRS}$ represents the second resource quantity, $N_{RE}^{DMRS}$ represents a quantity of REs occupied by the DMRS within one PRB, and $N_{oh}^{PRB}$ represents overheads indicated by higher layer signaling.

30. The method according to any one of claims 26 to 29, wherein the method further comprises:

receiving control information from the first device through the first physical shared channel;
determining a quantity of time domain subunits related to the PRS based on the quantity of time domain subunits occupied by the PRS and the frequency domain interval;
determining a quantity of coded modulation symbols of the control information based on the quantity of time domain subunits related to the PRS; and

demodulating the control information based on the quantity of coded modulation symbols of the control information, wherein
the quantity of time domain subunits related to the PRS is any one of the following:

$$M_{SL-PRS} / N_{comb} ;$$

or

$$\omega \cdot M_{SL-PRS} / N_{comb} ;$$

or

$$floor(M_{SL-PRS} / N_{comb}) ;$$

or

$$floor(\omega \cdot M_{SL-PRS} / N_{comb}) ;$$

or

$$ceiling(M_{SL-PRS} / N_{comb}) ;$$

or

$$ceiling(\omega \cdot M_{SL-PRS} / N_{comb}) ,$$

wherein
$M_{SL-PRS}$ represents the quantity of time domain subunits occupied by the PRS, $N_{comb}$ represents the frequency domain interval, $\omega$ is a real number greater than 0 and less than 1, $floor(x)$ represents rounding down x, and *ceiling (x)* represents rounding up x.

31. The method according to claim 25 or 30, wherein the first time domain unit is a slot, the time domain subunit is a symbol, the first physical shared channel is a PSSCH, and the quantity of coded modulation symbols of the control information satisfies the following condition: 

$$Q'_{SCI2} = \min\left\{ \left\lceil \frac{(Q_{SCI2} + L_{SCI2}) \cdot \beta^{SCI2}_{offset}}{Q^{SCI2}_m \cdot R} \right\rceil, \left\lceil \alpha \sum_{l=0}^{N^{PSSCH}_{symbol}-1} M^{SCI2}_{sc}(l) \right\rceil \right\} + \gamma ,$$

wherein

$Q'_{SCI2}$ represents the quantity of coded modulation symbols of the control information, $Q_{SCI2}$ represents a quantity of bits of the control information, $L_{SCI2}$ represents a quantity of cyclic redundancy check bits of the control information, $\beta^{SCI2}_{offset}$ is a parameter indicated by 1st-stage sidelink control information SCI, $M^{SCI2}_{sc}(l)$ represents a quantity of subcarriers that are used to send the control information at a symbol $l$ and that are of the first physical shared channel, R represents a code rate, $\gamma$ is a quantity of unoccupied REs in a resource block RB in which a last coded symbol of the control information is located, $Q^{SCI2}_m$ represents a modulation order, $\alpha$ is a scaling factor configured through higher layer signaling, $N^{PSSCH}_{symbol}$ represents a quantity of symbols of the first physical shared channel in one slot, $N^{PSSCH}_{symbol} = N^{sh}_{symb} - N^{PSFCH}_{symb} - N^{SL-PRS}_{symb}$ , $N^{sh}_{symb}$ is determined by the quantity of sidelink symbols in one slot, $N^{PSFCH}_{symb}$ represents the quantity of symbols related to the physical feedback channel, and $N^{SL-PRS}_{symb}$ represents the quantity of time domain subunits related to the PRS.

**32.** The method according to any one of claims 18 to 31, wherein the method further comprises:

receiving third indication information from the first device; and
determining the first resource quantity based on the first parameter comprises:
when the third indication information is a first value, determining the first resource quantity based on the first parameter.

**33.** The method according to any one of claims 18 to 32, wherein the method further comprises:

determining a multiplexing manner of the PRS and the second physical shared channel in the first time domain unit, wherein the multiplexing manner is time division multiplexing or frequency division multiplexing; and
the multiplexing manner is configured through higher layer signaling, or is preconfigured, or is predefined, or corresponds to the first time domain unit, or is indicated by the first device.

**34.** The method according to claim 33, wherein the multiplexing manner is indicated by the first device, and the method further comprises:
receiving fourth indication information from the first device, wherein the fourth indication information indicates the multiplexing manner.

**35.** A data transmission method, applied to a first device, wherein the method comprises:

determining, based on a first parameter, a quantity of coded modulation symbols of control information transmitted on a first physical shared channel, wherein the first parameter comprises a quantity of time domain subunits occupied by a positioning reference signal PRS, the PRS and a second physical shared channel are located in a first time domain unit, and the second physical shared channel is used for transmission of the control information; and
transmitting the control information on the first physical shared channel.

**36.** The method according to claim 35, wherein the first physical shared channel and the second physical shared channel are a same channel; or
the first physical shared channel is used for initial transmission of the control information, and the second physical shared channel is used for retransmission of the control information.

**37.** The method according to claim 35 or 36, wherein in the first time domain unit, the PRS and the second physical shared channel are time division multiplexed, and determining, based on the first parameter, the quantity of coded modulation symbols of the control information transmitted on the first physical shared channel comprises:

determining a quantity of time domain subunits related to the PRS based on the quantity of time domain subunits occupied by the PRS; and
determining the quantity of coded modulation symbols of the control information based on the quantity of time domain subunits related to the PRS.

**38.** The method according to any one of claims 35 to 37, wherein the method further comprises:
sending first indication information, wherein the first indication information is used to determine the quantity of time domain subunits related to the PRS.

**39.** The method according to any one of claims 35 to 38, wherein in the first time domain unit, the PRS and the second physical shared channel are frequency division multiplexed, the first parameter further comprises a frequency domain interval of the PRS, and determining, based on the first parameter, the quantity of coded modulation symbols of the control information transmitted on the first physical shared channel comprises:

determining the quantity of time domain subunits related to the PRS based on the quantity of time domain subunits occupied by the PRS and the frequency domain interval; and
determining the quantity of coded modulation symbols of the control information based on the quantity of time domain subunits related to the PRS.

**40.** The method according to any one of claims 35 to 39, wherein the method further comprises:
sending fifth indication information, wherein the fifth indication information is used to determine the quantity of time domain subunits related to the PRS.

41. The method according to any one of claims 35 to 40, wherein the method further comprises:

sending third indication information; and
determining, based on the first parameter, the quantity of coded modulation symbols of the control information transmitted on the first physical shared channel comprises:
when the third indication information is a first value, determining the quantity of coded modulation symbols of the control information based on the first parameter.

42. The method according to any one of claims 35 to 41, wherein the method further comprises:
sending fourth indication information, wherein the fourth indication information indicates a multiplexing manner of the PRS and the second physical shared channel in the first time domain unit, and the multiplexing manner is time division multiplexing or frequency division multiplexing.

43. The method according to claim 42, wherein the method further comprises:
determining the multiplexing manner of the PRS and the second physical shared channel in the first time domain unit, wherein the multiplexing manner is time division multiplexing or frequency division multiplexing, and the multiplexing manner is configured through higher layer signaling, or is preconfigured, or is predefined, or corresponds to the first time domain unit.

44. A data transmission method, applied to a second device, wherein the method comprises:

receiving control information from a first device through a first physical shared channel;
determining a quantity of coded modulation symbols of the control information based on a first parameter, wherein the first parameter comprises a quantity of time domain subunits occupied by a positioning reference signal PRS, the PRS and a second physical shared channel are located in a first time domain unit, and the second physical shared channel is used for transmission of the control information; and
demodulating the control information based on the quantity of coded modulation symbols of the control information.

45. The method according to claim 44, wherein the PRS and the second physical shared channel are time division multiplexed, and determining the quantity of coded modulation symbols of the control information based on the first parameter comprises:

determining a quantity of time domain subunits related to the PRS based on the quantity of time domain subunits occupied by the PRS; and
determining the quantity of coded modulation symbols of the control information based on the quantity of time domain subunits related to the PRS.

46. The method according to claim 44 or 45, wherein in the first time domain unit, the PRS and the second physical shared channel are time division multiplexed, and the method further comprises:

receiving first indication information from the first device, wherein the first indication information is used to determine the quantity of time domain subunits related to the PRS; and
determining the quantity of coded modulation symbols of the control information based on the first parameter comprises:

determining the quantity of time domain subunits related to the PRS based on the quantity of time domain subunits occupied by the PRS and the first indication information; and
determining the quantity of coded modulation symbols of the control information based on the quantity of time domain subunits related to the PRS.

47. The method according to any one of claims 44 to 46, wherein in the first time domain unit, the PRS and the second physical shared channel are frequency division multiplexed, the first parameter further comprises a frequency domain interval of the PRS, and determining the quantity of coded modulation symbols of the control information based on the first parameter comprises:

determining the quantity of time domain subunits related to the PRS based on the quantity of time domain subunits occupied by the PRS and the frequency domain interval; and

determining the quantity of coded modulation symbols of the control information based on the quantity of time domain subunits related to the PRS.

48. The method according to any one of claims 44 to 47, wherein in the first time domain unit, the PRS and the second physical shared channel are frequency division multiplexed, and the method further comprises:

receiving fifth indication information from the first device, wherein the fifth indication information is used to determine the quantity of time domain subunits related to the PRS; and

determining the quantity of coded modulation symbols of the control information based on the first parameter comprises:

determining the quantity of time domain subunits related to the PRS based on the quantity of time domain subunits occupied by the PRS, the frequency domain interval, and the fifth indication information; and determining the quantity of coded modulation symbols of the control information based on the quantity of time domain subunits related to the PRS.

49. The method according to any one of claims 44 to 48, wherein the method further comprises:

receiving third indication information from the first device; and

determining the quantity of coded modulation symbols of the control information based on the first parameter comprises:

when the third indication information is a first value, determining the quantity of coded modulation symbols of the control information based on the first parameter.

50. The method according to any one of claims 44 to 49, wherein the method further comprises:
determining a multiplexing manner of the PRS and the second physical shared channel in the first time domain unit, wherein the multiplexing manner is time division multiplexing or frequency division multiplexing, and the multiplexing manner is configured through higher layer signaling, or is preconfigured, or is predefined, or corresponds to the first time domain unit, or is indicated by the first device.

51. The method according to claim 50, wherein the multiplexing manner is indicated by the first device, and the method further comprises:
receiving fourth indication information from the first device, wherein the fourth indication information indicates the multiplexing manner.

52. A communication apparatus, comprising a module or unit configured to perform the method according to any one of claims 1 to 17, or comprising a module or unit configured to perform the method according to any one of claims 18 to 34, or comprising a module or unit configured to perform the method according to any one of claims 35 to 43, or comprising a module or unit configured to perform the method according to any one of claims 44 to 51.

53. A communication apparatus, comprising a processor, wherein the processor is configured to execute a computer program or instructions stored in a memory, to enable the apparatus to perform the method according to any one of claims 1 to 17, or enable the apparatus to perform the method according to any one of claims 18 to 34, or enable the apparatus to perform the method according to any one of claims 35 to 43, or enable the apparatus to perform the method according to any one of claims 44 to 51.

54. The apparatus according to claim 53, wherein the apparatus further comprises the memory and/or a communication interface, and the communication interface is coupled to the processor; and
the communication interface is configured to input and/or output information.

55. A computer-readable storage medium, wherein the computer-readable storage medium stores a computer program or instructions, and when the computer program or the instructions are run on a communication apparatus, the communication apparatus is enabled to perform the method according to any one of claims 1 to 17, or the communication apparatus is enabled to perform the method according to any one of claims 18 to 34, or the communication apparatus is enabled to perform the method according to any one of claims 35 to 43, or the communication apparatus is enabled to perform the method according to any one of claims 44 to 51.

56. A computer program product, wherein the computer program product comprises a computer program or instructions used to perform the method according to any one of claims 1 to 51.

57. A chip, wherein the chip is coupled to a memory, and is configured to read and execute program instructions stored in the memory, to implement the method according to any one of claims 1 to 17, or implement the method according to any one of claims 18 to 34, or implement the method according to any one of claims 35 to 43, or implement the method according to any one of claims 44 to 51.

100

(a)

(b)

(c)

FIG. 1

One slot

(a)

One or more
subchannels

One slot

(b)

AGC

PSCCH

PSSCH

SL-PRS

DMRS

GP

FIG. 2

Method 300

First device

S310: Determine a first
resource quantity based
on a first parameter

S320: Determine a TBS of a
first TB based on the first
resource quantity

S330: First TB

Second device

S340: Determine the
first resource quantity
based on the first
parameter

S350: Determine the TBS of
the first TB based on the first
resource quantity

S360: Demodulate the first TB
based on the TBS

FIG. 3

(a)

First time domain unit/Second time domain unit

(b)

FIG. 4

FIG. 5

(a) One slot — AGC, DMRS, PSSCH, PSCCH, DMRS, SL-PRS, SL-PRS, SL-PRS, DMRS, PSSCH, GP

(b) One slot — AGC, DMRS, PSSCH, PSCCH, DMRS, SL-PRS, SL-PRS, DMRS, GP, PSFCH, PSFCH, GP

Method 600

First device             Second device

S610: Determine a first resource quantity based on a first parameter

S620: Determine a TBS of a first TB based on the first resource quantity

S630: First TB

S640: Determine the first resource quantity based on the first parameter

S650: Determine the TBS of the first TB based on the first resource quantity

S660: Demodulate the first TB based on the TBS

FIG. 6

Method 700

First device             Second device

S710: Determine, based on a first parameter, a quantity of coded modulation symbols of SCI transmitted on a first PSSCH

S720: SCI

S730: Determine, based on the first parameter, the quantity of coded modulation symbols of the SCI transmitted on the first PSSCH

S740: Demodulate the SCI based on the quantity of coded modulation symbols of the SCI

FIG. 7

Method 800

FIG. 8

FIG. 9

3000

| Processor 3010 | Transceiver 3030 |

| Memory 3020 |

FIG. 10

Chip system 4000

| Logic circuit 4010 |

| Input/Output interface 4020 |

FIG. 11

## INTERNATIONAL SEARCH REPORT

| | International application No. |
|---|---|
| | **PCT/CN2024/071736** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, CJFD, VEN, ENTXT, ENTXTC, 3GPP: 数据块, 传输块, TB, 定位参考, PRS, 大小, TBS, 物理共享信道, PSSCH, 时隙, 时域, 符号, transport block, positioning reference signal, size, physical shared channel, slot, time domain, symbol

**C. DOCUMENTS CONSIDERED TO BE RELEVANT**

| Category* | Citation of document, with indication, where appropriate, of the relevant passages | Relevant to claim No. |
|---|---|---|
| A | CN 115706627 A (CICT CONNECTED AND INTELLIGENT TECHNOLOGIES CO., LTD.) 17 February 2023 (2023-02-17) entire document | 1-57 |
| A | CN 115643637 A (VIVO MOBILE COMMUNICATION CO., LTD.) 24 January 2023 (2023-01-24) entire document | 1-57 |
| A | WO 2023025124 A1 (VIVO MOBILE COMMUNICATION CO., LTD.) 02 March 2023 (2023-03-02) entire document | 1-57 |
| A | US 2021194652 A1 (INTEL CORP.) 24 June 2021 (2021-06-24) entire document | 1-57 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 April 2024** | **22 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/071736**

| Patent document cited in search report | | | Publication date (day/month/year) | Patent family member(s) | Publication date (day/month/year) |
|---|---|---|---|---|---|
| CN | 115706627 | A | 17 February 2023 | None | |
| CN | 115643637 | A | 24 January 2023 | None | |
| WO | 2023025124 | A1 | 02 March 2023 | None | |
| US | 2021194652 | A1 | 24 June 2021 | None | |

Form PCT/ISA/210 (patent family annex) (July 2022)

**EP 4 694 455 A1**

**Patent documents cited in the description**

- CN 202310489445 X
- CN 202310541452 X